# EUROPEAN PATENT SPECIFICATION

(11) **EP 1 667 546 B1**
(45) Date of publication and mention of the grant of the patent: **26.01.2011**
(21) Application number: 04779151.2
(22) Date of filing: 23.07.2004
(51) Int. Cl.: A44C 21/00, A63F 3/06

(54) **A METHOD TO PRODUCE UNIQUELY IDENTIFIABLE CASINO GAMING CHIPS**
VERFAHREN ZUR HERSTELLUNG EINDEUTIG IDENTIFIZIERBARER CASINO-SPIELJETONS
PROCEDE DE FABRICATION POUR JETONS DE JEU DE CASINO IDENTIFIABLES DE FACON UNIQUE

(30) Priority: 25.07.2003 US 490072 P
(43) Date of publication of application: 14.06.2006
(73) Proprietor: BALLY GAMING INTERNATIONAL, INC., Las Vegas Nevada 89119-3605 (US)
(72) Inventor: SOLTYS, Richard, Newcastle, WA 98059 (US); HUIZINGA, Richard, Newcastle, WA 98059 (US)
(74) Representative: Grünecker, Kinkeldey, Stockmair & Schwanhäusser Anwaltssozietät
(86) International application number: PCT/US2004/023947
(87) International publication number: WO 2005/011428

(56) References cited:
- CA-A- 1 206 173
- US-A- 5 216 234
- US-B1- 6 264 109
- US-B1- 6 352 261

## Description

### TECHNICAL FIELD

The disclosure is generally related to the gaming industry, and particularly to uniquely encoded casino gaming chips of various denominations, see US-B-6264109 and US-B-6352261.

### BACKGROUND OF THE INVENTION

Casinos use gaming chips for many of their games, for example, Blackjack, Baccarat, Roulette, and Poker. Gaming chips are preferred, in part, as a way to disassociate the relationship between real money and the wagering process. Gaming chips are typically available in $1, $5, $25, $100, $500, $1,000, and $5,000 denominations. The relative denominations of the gaming chips are visually distinguishable by variations in color, size, patterns, logos, or even explicit denomination markings, for example.

Many casinos find it advantageous to customize their chips with their own logos or designs. These custom chips are used not only to thwart counterfeiters, but also for advertisement purposes and to distinguish one casino's chips from that of other casinos. Many casinos even permit the use of specialty chips, which can be manufactured for certain groups of people, for instance, executives attending a corporate retreat. From an advertising perspective, a market exists for local merchants such as restaurants, hotels, and theaters to have their logos or designs portrayed on casino chips.

The primary purpose of developing distinguishable gaming chips is to prevent counterfeiting operations and make inventory functions more feasible. Since at least the early 1900's, counterfeiters have recognized that casinos have a monumental task of trying to track and control the whereabouts of their gaming chips. For instance, local merchants along the Las Vegas strip used to allow patrons to use casino gaming chips for everyday purchases of items like shoes and clothes at the local shops. Even though the United States government restricted shops from accepting gaming chips, which the government determined to be unauthorized "real" money, casinos still permit patrons to leave the casino with gaming chips as keepsakes or souvenirs. Therefore, counterfeiters will likely always have easy access to a casino's gaming chips. Casinos periodically replace their existing chip inventory with newly designed chips as a method of thwarting counterfeiters.

Due to the lead time to receive a new shipment of chips and the associated cost, casinos have searched for other security methods to protect the integrity of their gaming chips. Some other chip security features that have been adopted by casinos are metallic grids, see-through "lunettes" (windows), complex designs such as holograms, and even microchips. Since the standard method of making gaming chips is by injection molding, the chips with the metallic grids and complex designs require highly specialized and expensive tooling. Design changes result in long lead times and high costs associated with retooling. These chips are often processed in bulk and by denominational batches so that the molds and tooling can be repeatedly used. Although some gaming chip manufacturers allow purchasers to order customized chips, these chips are expensive and fairly limited in their design features. Likewise, gaming chips with embedded microchips are expensive. Because many of the larger casinos have literally millions of chips in circulation on any given day, it can be cost prohibitive for the casino to stock customized or microchip embedded gaming chips.

U.S. Patent No. 6,264,109 discloses a token including a plastic cover having an external surface and a base engaging surface. A plastic base has an external surface and a cover engaging surface, the base being attached to the cover. An axial spacing projection maintains a space between the base and the cover, the axial spacing projection being disposed on the cover engaging surface of the base and including a first height. The axial spacing projection further includes one of a continuous ring and a discontinuous ring. A closure ring disposed on the base engaging surface of the cover comprises one of a continuous ring and a discontinuous ring. A peripheral annular region includes a space having a second height and is disposed adjacent an edge of the token, the peripheral annular region being defined by the axial spacing projection. The first height is approximately equal to the second height. An electronic device includes an electronic circuit which includes one of a memory containing identification, a coding information, and a transmitter-receiver having a peripheral antenna. An internal central region includes a receptacle for receiving the electronic device, the internal central region being defined by the axial spacing projection. A plastic jointing material is disposed in the peripheral annular region, wherein the plastic jointing secures the base to the cover. The closure ring includes an engaging diameter which is smaller than a diameter of the axial spacing projection such that the closure ring and the axial spacing projection engage and axially overlap one another when the cover is fixed to the base.

U.S. Patent No. 6,352,261 discloses a casino chip of a stated value having a central transparent portion with at least one discrete particle therein, such as a precious or semi-precious metallic element. When shaken, the chip simulates the rattling of a pair of dice to a player.

There is generally a need to design and manufacture uniquely identifiable gaming chips *en masse* at a reasonable cost and within a much shortened cycle time (*i.e.,* the elapsed time between the chip order by a casino or other customer until the gaming chips are produced, packaged, and delivered to the respective purchaser).

### SUMMARY OF THE INVENTION

The present invention relates to a method for producing gaming chips as defined in independent claims 1, 12, 19 and 36. Preferred embodiments of the inventive subject matter are the subject matter of the dependent claims.

The present disclosure is generally directed toward a uniquely identifiable gaming chip. One aspect includes the printing of indicia on a substrate where the indicia can be a machine-readable symbol encoding a unique identifier, a machine-readable symbol not encoding a unique identifier, a human-readable symbol, a human-readable graphical human-readable symbol, or any combination of the above. A variety of printing methods may be employed to print the indicia onto the substrate. The printed substrate portions can be formed into three-dimensional shapes with the printed indicia on the inner surface. The pre-formed chip members can then be inserted into an injection mold where thermoplastic resin may be injected into the mold, between the respective chip members, to bond the chip members together.

The utilization of a computing system and digital printing techniques advantageously allows any indicia to be quickly designed, created and printed onto the substrate irrespective of the complexity of the designed indicia. Low setup costs and almost no production down time can be achieved by using digital printing techniques, even when each gaming chip is unique. Further, a significant business advantage results from elimination of the tooling changeover requirements common to multi-shot injection molds.

In one aspect, a method to produce gaming chips comprises providing a first chip member having an exterior surface and an interior surface opposed to the exterior surface, the interior surface of the first chip member forming a cavity and bearing at least one unique identifier; and filling the cavity formed by the second surface of the first chip member to seal the at least one unique identifier in an interior of the first chip member, the first chip member being sufficiently transparent that the at least one unique identifier is optically detectable from an exterior of the first chip member.

In another aspect, the method comprises providing a first chip member having an approximately planar portion and a perimeter edge extending perpendicularly from a perimeter of the planar portion, the perimeter edge bearing at least one machine-readable symbol encoding a unique identifier; providing a second chip member having an approximately planar portion; and adhering the second chip member to the first chip member to seal the at least one machine-readable symbol encoding the unique identifier in an interior of the gaming chip, the first chip member being sufficiently transparent that the at least one machine-readable symbol encoding the unique identifier is optically detectable from an exterior of the gaming chip.

In yet another aspect, the method comprises printing at least a machine-readable symbol on a plurality of regions on a first surface of at least the first substrate, the machine-readable symbol encoding an identifier that uniquely identifies the gaming chip; creating at least one chip member from the first substrate, the chip member having an inner and an outer surface, at least the one chip member bearing the machine-readable symbol on the inner surface thereof; creating another chip member; positioning at least one chip member in a back-to-back relationship with another chip member such that any inner surface bearing the machine-readable symbol is distally located by approximately the thickness of the substrate from the outer surface of the chip member; and cohering the one chip member with another chip member such that the machine-readable symbol on at least the one chip member is readable from a location external of the gaming chip.

In still another aspect, the method comprises remotely receiving digital data, the digital data comprising information for producing the gaming chip; at least one unique indicia being included in the information comprising the digital data; encrypting the information; encoding the information into a machine-readable symbol, the machine-readable symbol; printing the machine-readable symbol onto a region of at least a substrate; forming at least a first chip member from the substrate, the first chip member including the machine-readable symbol; forming a second chip member; and coupling the first chip member with the second chip member to produce a gaming chip such that the machine-readable symbol is readable from a location external of the gaming chip.

A gaming chip for use in a casino environment, the gaming chip comprises an approximately planar first surface; an approximately planar second surface; spaced from and approximately parallel to the first surface; a perimeter edge extending between the first and the second surfaces; and a unique indicia extending along at least a portion of the perimeter edge on an interior of the gaming chip, wherein the perimeter edge is sufficiently transparent that the unique indicia is optically detectable from an exterior of the first chip member.

The gaming chip comprises an approximately planar first surface; an approximately planar second surface; spaced from and approximately parallel to the first surface; a perimeter side surface extending at least partially between the first and the second surfaces; and a unique indicia located on at least a portion of the gaming chip, the unique indicia protected from wear, abrasion, or damage wherein the unique indicia is located beneath a sufficiently transparent member such that the unique indicia is optically detectable from a location exterior of the gaming chip.

### BRIEF DESCRIPTION OF THE DRAWINGS

In the drawings, identical reference numbers identify similar elements or acts. The sizes and relative positions of elements in the drawings are not necessarily drawn to scale. For example, the shapes of various elements and angles are not drawn to scale, and some of these elements are arbitrarily enlarged and positioned to improve drawing legibility. Further, the particular shapes of the elements as drawn, are not intended to convey any information regarding the actual shape of the particular elements, and have been solely selected for ease of recognition in the drawings.
Figure 1 is a cross-sectional view of an encoded gaming chip, the gaming chip including a first cup-shaped chip and a second planar member according to one illustrated embodiment.
Figure 2 an isometric view of a first substrate used for creating a second chip member, a portion of the substrate bearing an indicia.
Figure 3 an isometric view of a second substrate used for creating a second chip member, a portion of the substrate bearing an indicia.
Figure 4 is a top plan view of a portion of the substrate bearing a mathematically pre-distorted machine-readable symbol encoded with unique identifiers, human-readable symbols, or both printed thereon.
Figure 5 is a schematic diagram illustrating a computing system for creating machine-readable symbols, human-readable symbols, or both.
Figure 6A is a perspective view of a graphical user interface illustrating various menus and windows for a gaming chip design program.
Figure 6B is a continuation of the graphical user interface for the gaming chip design program of Figure 6A.
Figure 7 is a schematic illustration of an apparatus for forming and injection molding the gaming chip of Figure 1.
Figure 8 is a flow diagram of one method of generating a value that can be used in creating a unique identifier.
Figure 9 is a flow diagram of an alternate method of generating a value that can be used in creating a unique identifier.
Figure 10 is a flow diagram of a method for producing the gaming chip of Figure 1 according to one illustrated embodiment.
Figure 11 is an isometric view of another embodiment of an encoded gaming chip, this gaming chip having two cup-shaped chip members.
Figure 12 is an isometric, exploded view of the encoded gaming chip of Figure 11.
Figure 13 an isometric view of yet another embodiment of an encoded gaming chip, this gaming chip including first and second filler material and an alignment member.
Figure 14 is side elevation view of the encoded gaming chip of Figure 13.
Figure 15 a cross-sectional view of the encoded gaming chip of Figure 13.
Figure 16 is an isometric, exploded view of the encoded gaming chip of Figure 13.
Figure 17 an isometric view of yet another embodiment of an encoded gaming chip, this gaming chip including a substrate band and an embedded center chip member.
Figure 18 is side elevation view of the encoded gaming chip of Figure 17.
Figure 19 a cross-sectional view of the encoded gaming chip of Figure 17.
Figure 20 is an isometric, exploded view of the encoded gaming chip from Figure 17.
Figure 21 is an isometric view of a printed substrate band used for creating the gaming chip of Figure 17, the substrate bearing at least a machine-readable symbol encoded with a unique identifier.

### DETAILED DESCRIPTION

In the following description, certain specific details are set forth in order to provide a thorough understanding of various embodiments of the invention. However, one skilled in the art will understand that the invention may be practiced without these details. In other instances, well-known structures and processes associated with computing systems including CAD computing systems, various printing systems and techniques, die stamping methods, and injection molding systems and techniques have not been shown or described in detail in order to avoid unnecessarily obscuring descriptions of the embodiments of the invention.

Unless the context requires otherwise, throughout the specification and claims, which follow, the word "comprise" and variations thereof, such as "comprises" and "comprising" are to be construed in an 'inclusive' sense, that is as "including, but not limited to."

The term "indicia" as used throughout the specification is meant to broadly describe any type of symbol, picture, text, design, or any other subject matter that can be printed onto a substrate. The indicia can be in a machine-readable format (hereinafter referred to as a "machine-readable symbol"), human-readable format (hereinafter referred to as a "human-readable symbol"), or some combination thereof. For example, a machine-readable symbol may be a barcode symbol, whereas a human-readable symbol may be a digital picture of a building taken with a digital camera.

The headings provided herein are for convenience only and do not interpret the scope or meaning of the claimed invention.

The described processes and structures may allow the production of casino gaming chips with complex graphic designs and patterns incorporated therein. Casinos, selected customers, or even individuals can select their own complex graphic designs. The lead-time for manufacturing these customized chips can be greatly reduced with the advent of digital printing techniques. In addition, the gaming chips should be capable of being mass produced at a competitive cost, extremely flexible in designs (*e.g.*, logos, advertisements, etc.), and having significantly reduced lead times compared with conventionally manufactured gaming chips even where each gaming chip is unique (*e.g.*, carries a unique identifier).

The described processes and structures may allow for the production of high quality gaming chip for commercial or personal use in casinos. Some desirable attributes of the gaming chips include excellent graphics quality, surface texture, uniformity and consistency among manufactured chips, and chip weight.

The described processes and structures may allow for the development of a gaming chip with robust and uncompromising security features. The security or anti-counterfeiting features of various embodiments of gaming chips discussed *infra* are primarily that these chips are difficult to duplicate without substantial technical expertise and capital investment, the chips are integrally assembled so that a chip could only be disassembled through destructive means, and the chips are encoded with a unique, permanently embedded identifier on each chip. The identifier would preferably be in machine-readable format in lieu of a human-readable format. Thus, the casino may quickly and automatically detect the introduction of any counterfeit chip.

### THE GAMING CHIP PRODUCT

Casino gaming chips are primarily manufactured in two nominal diameters: 39mm and 41 mm, and the overall gaming chip thickness is typically about 3.3 mm. The embodiments discussed herein may be extended to gaming chips of various shapes, sizes, and configurations, for example rectangular shaped chips with rounded edges.

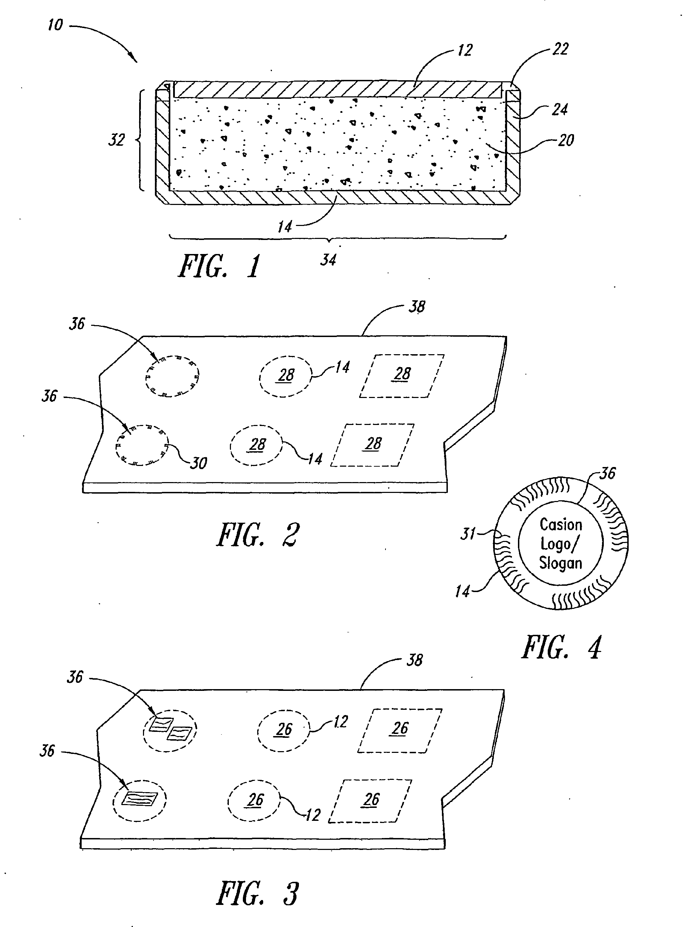

Figure 1 illustrates one embodiment of a casino gaming chip 10. The gaming chip 10 can be configured with a first chip member 12, a second chip member 14, and filler material 20. In the illustrated embodiment, the chip members 12, 14 may be configured to have a variety of complementary geometric shapes, for example, circular, rectangular, or square. Further, either chip member 12, 14 may be configured to have a cup or cap shape, for example, a cup shape may be created when a perimeter 32 of the chip is manipulated to project in a substantially perpendicular manner relative to a planar surface 34 of the chip. In the illustrated embodiment, the second chip member 14 has been formed into a cup shape and the gaming chip 10 has beveled corners 22.

Figures 2 and 3 illustrate that the chip members 12, 14 from the embodiment shown in Figure 1 may be formed from a transparent or translucent substrate 38 and may, for example, have a thickness in the range of 0.005 inches to 0.077 inches. The substrate 38 may be comprised of one or more of a variety of materials, for example, Polycarbonate, LEXAN® - available from the General Electric Company, Polyester, polystyrene, MYLAR® - available from DuPont Teijin Films, Ltd., vinyl, LUCITE® - available from ICI Acrylics Inc., acrylic, or other similar plastic or composite materials. As a means of increasing the weight of the chip, the substrate 38 may also be made from a high specific gravity material, for example plastic impregnated with weighted glass. Each of the chip members 12, 14 may have a respective inner/interior or substantially planar surface 26, 28.

Additionally or alternatively, casinos may employ substrates 38 of different colors to identify the casino, chip denomination, or both. The colored substrate 38 should still be sufficiently transparent to permit any indicia printed on the interior surface 26, 28 of the gaming chip 10 to be readable from the exterior of the chip. This alternative can be an inexpensive means of mass-producing single-colored gaming chips 10 according to the present embodiment while retaining the security feature of each chip 10 having the machine-readable symbol 30 encoding an identifier that uniquely identifies that gaming chip 10.

The filler material 20 can constitute a portion or substantially all of the core of the gaming chip 10. The filler material 20 bonds the first chip member 12 to the second chip member 14 during the chip forming process - discussed *infra.* The filler material 20 can be a type of resin or adhesive material capable of durably bonding with the respective chip members and curing into a substantially solid member.

Preferring to Figure 4, either chip member 12, 14, or both, may include a machine-readable symbol 30 encoding a unique identifier. The machine-readably symbol 30 may be printed on the inner surface 26, 28 of one or both chip members 12, 14, respectively. The unique identifier may incorporate casino specific information, chip denomination, a unique chip identity, or any combination of the above. The unique chip identity can be any arrangement or selection of numbers, characters, or other symbols. The process of generating a unique identifier and the components that may be associated therewith is discussed in greater detail below.

Referring back to Figures 2 and 3, the machine-readable symbol 30 may be applied to any region on the inner surface 26, 28 of the chip member 12,14. Because gaming chips 10 are often stacked by players and the dealer, for example when placing wages, it is preferable to have the machine-readable symbol 30 printed along at least a portion of the perimeter 32 of the chip. After pre-forming the chip, the machine-readable symbol 30 is located on the vertical sidewall 24 of the chip member 14 and is readable from a remote sensing device even when stacked. The remote sensing device may be placed at a location external to and spaced from the gaming chip yet still be able to accurately read the machine-readable symbol. Thus, placing the machine-readable symbol on the perimeter 32 avoids interfering or delaying the dynamic gaming environment. As illustrated in the present embodiment, the machine-readable symbol 30 is applied to the outer perimeter 32 and inner surface 28 of the second chip member 14. In order to improve the first read rate of any scanners or optical sensors, it is desirable to have the machine-readable symbol 30 uniformly and repeatedly printed about the perimeter 32 of the chip.

As discussed above, at least one of the chip members 12, 14 having the machine-readable symbol 30 printed about its perimeter 32 may be pre-formed into a geometric shape. For example, a cup-shaped gaming chip may be created from a circular-shaped printed substrate portion when at least one of the chip members 12, 14 is pre-formed to have a cavity or pre-formed such that the perimeter 32 is made to extend substantially perpendicular to a planar portion 26, 28 of the chip member 12, 14. One aspect of pre-forming one of the chip members 12, 14 is that the indicia may become distorted during the pre-forming process. In a situation where the machine-readable symbol 30 is a barcode symbol, for example, the distortion may make the barcode unreadable.

To counter any undesired distortion, a mathematically pre-distorted indicia 31 may be printed onto the substrate as shown in Figure 4. The mathematically pre-distorted indicia 31 shown in Figure 4 schematically illustrates that in the previous barcode example, the barcode lines may be pre-distorted. The shape and configuration of the pre-distorted lines shown in Figure 4 are for illustrative purposes only and may not be a true and accurate representation of the actual mathematically pre-distorted indicia 31. Similarly, it may be desirable to also pre-distort the human-readable symbol 36, which may be positioned on the planar surface 26, 28 of at least one of the chip members 12, 14. One skilled in the art will appreciate that there are numerous techniques in the art for mathematically pre-distorting a symbol, a human-readable symbol, or both before printing the image onto a 2-D or 3-D surface.

A graphical or textual human-readable symbol 36 may also be printed on the inner surface 26, 28 of either or both chip members 12, 14. The human-readable symbol may be digitally generated and integrated with the machine-readable symbol 30 or may be created or printed independently therefrom. The human-readable symbol 36 may comprise any variety of designs, logos, monograms, text, numbers, symbols, etc. and may cover a substantial portion of the chip member inner surfaces 26, 28. The human-readable symbol 36 may allow humans to visually distinguish the chip denomination, issuing casino, or both, for example. The human-readable symbol 36 can encompass a variety of colors, patterns, or other identifiable features to include corporate logos, designs for specialty games or events, or seasonal themes.

### COMPUTING SYSTEM ENVIRONMENT

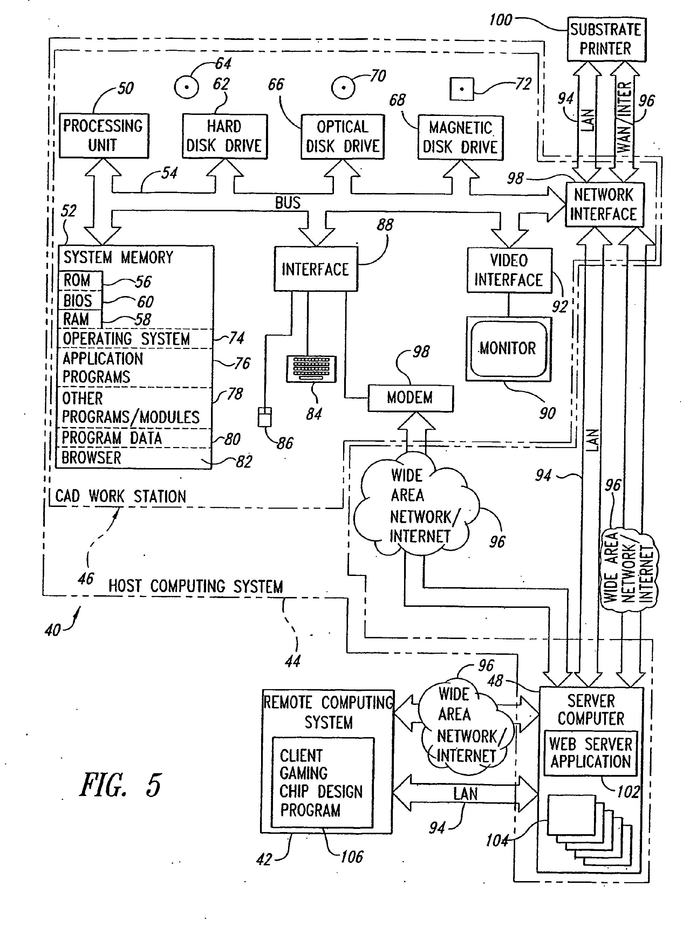

Figure 5 and the following discussion provide a brief, general description of a suitable computing environment in which embodiments of the invention can be implemented. Although not required, embodiments of the invention will be described in the general context of computer-executable instructions, such as program application modules, objects, or macros being executed by a computer. Those skilled in the relevant art will appreciate that the invention can be practiced with other computer system configurations, including hand-held devices, multiprocessor systems, microprocessor-based or programmable consumer electronics, personal computers ("PCs"), network PCs, mini computers, mainframe computers, and the like. The invention can be practiced in distributed computing environments where tasks or modules are performed by remote processing devices, which are linked through a communications network. In a distributed computing environment, program modules may be located in both local and remote memory storage devices.

Referring to Figure 5, a computing system 40 for rapidly designing gaming chips 10 with at least a machine-readable symbol 30 and possibly a graphical human-readable symbol 36 includes a remote computing system 42 and a host computing system 44. The remote computing system 42 may be located at a customer site or a site designated for receiving gaming chip orders. The host computing system 44 may be located within a gaming chip production and packaging facility.

A customer may select the design parameters of the gaming chip 10 with a gaming chip design program 106, discussed in more detail below. The customer or a sales representative may forward those parameters from the remote computing system 42 by a variety of means, for example over an Internet connection 96. The gaming chip design parameters can be used by the host computing system 44 to quickly produce customized gaming chips, which may be delivered to the customer using conventional shipping or courier means that afford sufficient security.

The host computing system 44 includes a conventional mainframe or mini-computer, referred to herein as the computer aided design ("CAD") workstation 46 and a server computer 48. While shown as separate devices, the server functionality can be implemented within the CAD workstation 46, which may reduce the cost of the system 40, but may also cause an unacceptable degradation in system performance.

The CAD workstation 46 includes a processing unit 50, a system memory 52 and a system bus 54 that couples various system components including the system memory 52 to the processing unit 50. The CAD workstation 46 and/or server computer 48, will at times be referred to in the singular herein, but this is not intended to limit the application of the invention to a single CAD workstation 46 and/or server computer 48 since in typical embodiments, there will be more than one CAD workstation 46 and/or server computer 48.

The gaming chip computing system 40 may employ other computers, such as conventional personal computers, where the size or scale of the system allows. The processing unit 50 may be any logic processing unit, such as one or more central processing units (CPUs), digital signal processors (DSPs), application-specific integrated circuits (ASICs), etc. Unless described otherwise, the construction and operation of the various blocks shown in Figure 5 are of conventional design. As a result, such blocks need not be described in further detail herein, as they will be understood by those skilled in the relevant art.

The system bus 54 can employ any known bus structures or architectures, including a memory bus with memory controller, a peripheral bus, and a local bus. The system memory 52 includes read-only memory ("ROM") 56 and random access memory ("RAM") 58. A basic input/output system ("BIOS") 60, which can form part of the ROM 56, contains basic routines that help transfer information between elements within the CAD workstation 46, such as during start-up.

The CAD workstation 46 also includes a hard disk drive 62 for reading from and writing to a hard disk 64, and an optical disk drive 66 and a magnetic disk drive 68 for reading from and writing to removable optical disks 40 and magnetic disks 42, respectively. The optical disk 40 can be a CD-ROM, while the magnetic disk 42 can be a magnetic floppy disk or diskette. The hard disk drive 62, optical disk drive 66 and magnetic disk drive 68 communicate with the processing unit 50 via the bus 54. The hard disk drive 62, optical disk drive 66 and magnetic disk drive 68 may include interfaces or controllers (not shown) coupled between such drives and the bus 54, as is known by those skilled in the relevant art. The drives 62, 66 and 68, and their associated computer-readable media 64, 70, 72, provide nonvolatile storage of computer readable instructions, data structures, program modules and other data for the CAD workstation 46. Although the depicted CAD workstation 46 employs hard disk 64, optical disk 70 and magnetic disk 72, those skilled in the relevant art will appreciate that other types of computer-readable media that can store data accessible by a computer may be employed, such as magnetic cassettes, flash memory cards, digital video disks ("DVD"), Bernoulli cartridges, RAMs, ROMs, smart cards, etc.

Program modules can be stored in the system memory 52, such as an operating system 74, one or more application programs 76, other programs or modules 78 and program data 80. The system memory 52 may also include a Web client or browser 82 for permitting the CAD workstation 46 to access and exchange data with sources such as Web sites of the Internet, corporate intranets, or other networks as described below, as well as other server applications on server computers including the server computer 48, such as those further discussed below. The browser 82 in the depicted embodiment is markup language based, such as Hypertext Markup Language (HTML), Extensible Markup Language (XML) or Wireless Markup Language (WML), and operates with markup languages that use syntactically delimited characters added to the data of a document to represent the structure of the document. A number of Web clients or browsers are commercially available such as NETSCAPE NAVIGATOR from America Online, and INTERNET EXPLORER available from Microsoft of Redmond, Washington

While shown in Figure 5 as being stored in the system memory 52, the operating system 74, application programs 76, other programs/modules 78, program data 80 and browser 82 can be stored on the hard disk 64 of the hard disk drive 62, the optical disk 70 of the optical disk drive 66, the magnetic disk 72 of the magnetic disk drive 68 and/or other computer-readable media. An operator, such as a draftsperson or technician, can enter commands and information into the CAD workstation 46 through input devices such as a keyboard 84 and a pointing device such as a mouse 86. Other input devices can include a microphone, joystick, game pad, scanner, etc. These and other input devices are connected to the processing unit 50 through an interface 88 such as a serial port interface that couples to the bus 54, although other interfaces such as a parallel port, a game port or a wireless interface or a universal serial bus ("USB") can be used. A monitor 90 or other display device is coupled to the bus 54 via a video interface 92, such as a video adapter. The CAD workstation 46 can include other output devices, such as speakers, printers, etc.

The CAD workstation 46 can operate in a networked environment using logical connections to one or more remote computers, such as the server computer 48 and remote computing system 42. The server computer 48 can be another personal computer, a server, another type of computer, or a collection of more than one computer communicatively linked together and typically includes many or all of the elements described above for the CAD workstation 46. The server computer 48 is logically connected to one or more of the remote computing systems 42 and CAD workstations 46 under any known method of permitting computers to communicate, such as through a local area network ("LAN") 94, or a wide area network ("WAN") or the Internet 96. Such networking environments are well known in wired and wireless enterprise-wide computer networks, intranets, extranets, and the Internet. Other embodiments include other types of communication networks including telecommunications networks, cellular networks, paging networks, and other mobile networks.

When used in a LAN networking environment, the CAD workstation 46 is connected to the LAN 94 through an adapter or network interface 98 (communicatively linked to the bus 54). When used in a WAN networking environment, the CAD workstation 46 may include a modem 98 or other device, such as the network interface 98, for establishing communications over the WAN/Internet 96. The modem 98 is shown in Figure 5 as communicatively linked between the interface 88 and the WAN/Internet 96. In a networked environment, program modules, application programs, or data, or portions thereof, can be stored on, or passed through, the server computer 48. In the depicted embodiment, the CAD workstation 46 is communicatively linked to the server computer 48 through the LAN 94 or the WAN/Internet 96 with TCP/IP middle layer network protocols; however, other similar network protocol layers are used in other embodiments, such as User Datagram Protocol ("UDP"). Those skilled in the relevant art will readily recognize that the network connections shown in Figure 5 are only some examples of establishing communication links between computers, and other links may be used, including wireless links.

The host computing system 44 may include one or more peripheral printer devices for producing gaming chip members 12, 14 having printed machine-readable symbols 30, human-readable symbols 36, or both based on the digital data received. For example, the host computing system 44 may include a substrate printer 100 coupled to the CAD workstation 46 to receive machine instructions over the LAN 94 and/or WAN or Internet 96.

The server computer 48 contains many of the same or similar structures, systems and subsystems as the CAD workstation 46, thus only the differences will be discussed in detail. The server computer 48 includes server applications 102 for the routing of instructions, programs, data and agents between the remote computing systems 42 and CAD workstation 46. For example the server applications 102 may include conventional server applications such as WINDOWS NT 4.0 Server, and/or WINDOWS 2000 Server, available from Microsoft Corporation of Redmond, Washington. Additionally, or alternatively, the server applications 102 can include any of a number of commercially available Web servers, such as INTERNET INFORMATION SERVICE from Microsoft Corporation and/or IPLANET from Netscape. The server computer 48 also includes one or more secure Webpages 104, serving as a user interface ("UI") for exchanging data, information and requests between the diagnostic and/or clinical sites and the design and/or manufacturing sites. The server applications 102 and/or Webpages 104 can be stored on any of a variety of computer-readable media. The Webpages 104 may further be linked to the client gaming chip design program 106.

### GAMING CHIP DESIGN PROGRAM

A customer can have substantial latitude in customizing their gaming chips 10. One skilled in the art will appreciate however, that certain design parameters may have to be held within certain ranges or controlled by the manufacturer due to production or security reasons. For example, only certain geometric shapes may be available based on the casino's specifications or because of the available tooling for accomplishing any required injection molding. Due to security concerns, the customer may be limited in selecting a range of unique identifiers or the manufacture may select the unique identifiers, which may be integrated with other data such as the casino information and/or chip denomination. Additionally, the gaming chips 10, for security reasons, will be produced with the machine-readable symbol located on the interior portion of the chip, yet visible from the chip exterior. This design feature would be required in all custom designed gaming chips in order to insure that the machine-readable symbols 30 located on the chip could not be manipulated, damaged, worn off, or transferred.

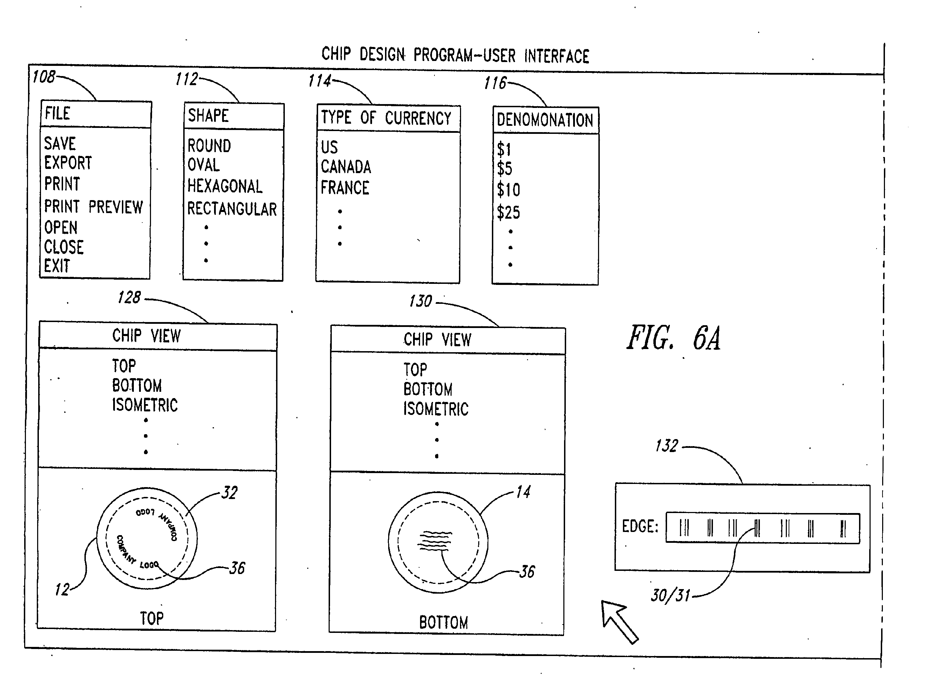

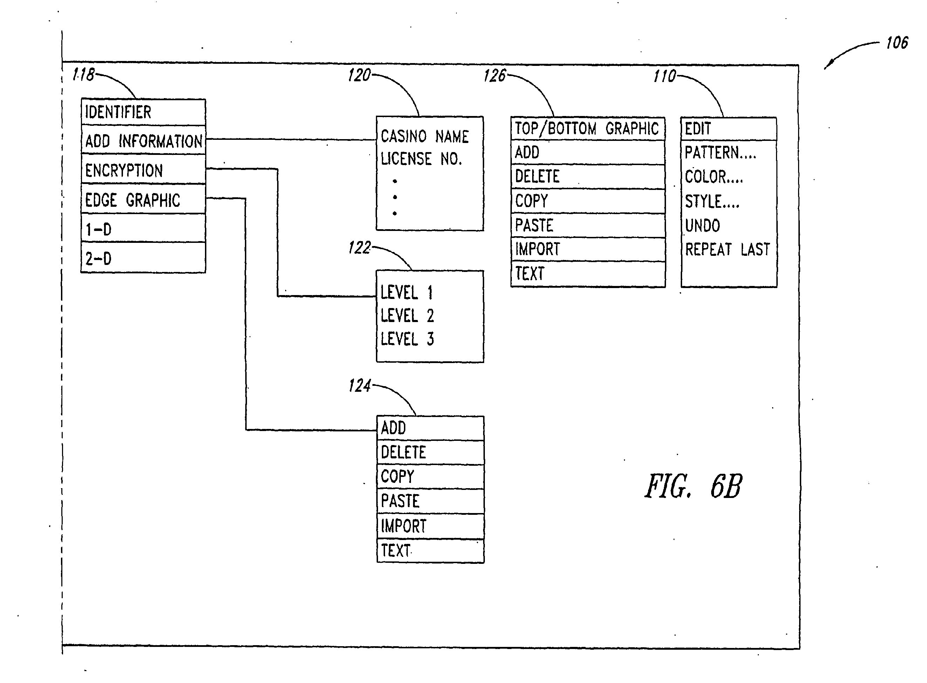

Figures 6A and 6B illustrate one embodiment of a graphical user interface, as viewed on a computer monitor, for the gaming chip design program 106. The gaming chip design program may be used locally by a manufacturer of gaming chips, and/or remotely by a customer to mockup and view sample designs, request samples to be made and shipped and/or to place orders for customized gaming chips.

The program 106 may have drop down menus, windows depicting the gaming chip components as the user builds the chip, color palettes (not shown), or dialog boxes (not shown). Referring to Figure 6A, the file menu 108 allows the user to perform standard functions such as opening and closing the program and saving a chip design. The file menu 108 can also be used to electronically export the chip design to another location, for example from the remote computing system 42 to the host computing system 44. An edit menu 110 allows a user to select various patterns, colors, or styles. Alternatively, certain sub-menus of the edit menu 110 may be segregated; for example, the selection of the gaming chip shape may be located in a shape menu 112. Other menus can also be displayed, for example, a currency menu 114 to allow the gaming chips 10 to be made for foreign casinos. A sub menu under the currency menu 114 can be a denomination menu 116. Thus a customer can choose both the type of currency that the gaming chip 10 is meant to represent as well as the denomination of the chip. When a denomination is selected, the program 106 can then prompt the customer with a separate pop-up window (not shown) for the quantity of chips that will be needed.

Referring now to Figure 6B, an identifier menu 118 can be used to input the information that will be used to create the unique identifier and ultimately, the machine-readable symbol 30. The pertinent casino or customer information, for example the casino name, license number, or corporate registration number, may be added through an add information sub-menu 120. An encryption sub-menu 122 permits the customer to select the level of encryption applied to the unique identifier. A higher level of encryption can provide additional security for gaming chips 10 that have a more common shape or pattern. An edge graphic sub-menu 124 permits the user to integrate any other indicia such as pictures or similar human-readable symbols with the identifier. The identifier menu 118 can also permit the customer to select the type of machine-readable symbol 30, for example one or two-dimensional symbologies, to be applied to the gaming chips 10.

Referring back to Figure 6A, the program 106 may also feature design windows that present the configuration of the gaming chip as the user creates the chip. Multiple design windows can be used to display the gaming chip 10 from different perspectives. For example, a top view 128, a bottom view 130, and an edge view 132 can allow the customer to completely view the gaming chip 10 and readily view any changes. The design windows 128, 130, 132 can permit different perspective views and can be quickly refreshed to show new action taken by the customer.

The headings of the menus, sub menus, and selectable items are provided herein for convenience only and do not interpret the scope or meaning of the claimed invention. In addition, the headings are for illustrative purposes only and should not be interpreted as limiting the program 106 to a particular enabled embodiment.

### INJECTION MOLDING APPARATUS FOR PRODUCING GAMING CHIPS

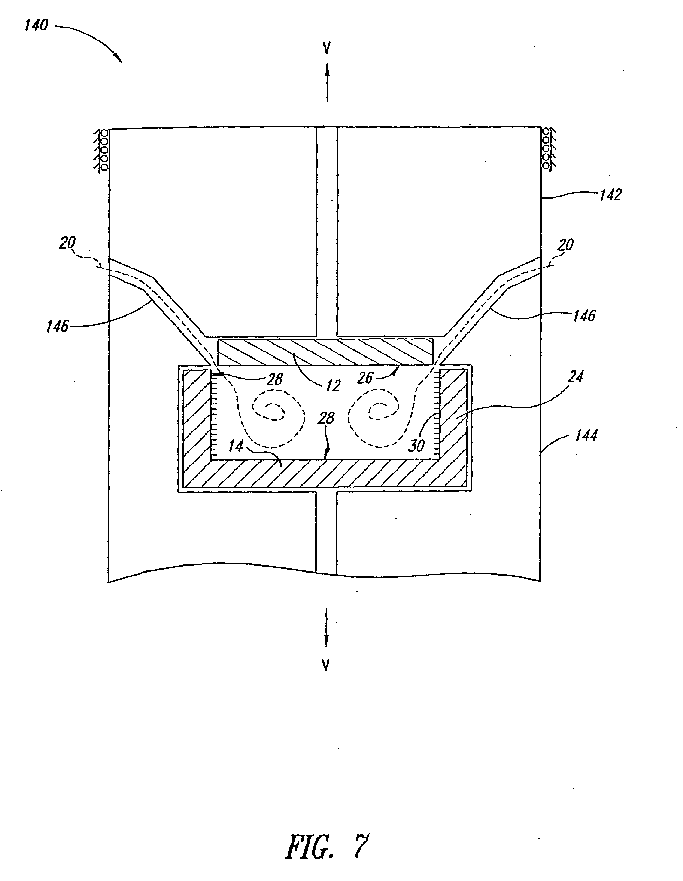

Figure 7 schematically illustrates an apparatus 140 for producing the gaming chip 10 of the present embodiment. The apparatus 140 may have a first mold half 142 and a second mold half 144 with at least one injection port 46. The first mold half 142 can be configured to receive the first chip member 12. The second mold half 144 can be configured to receive the second chip member 14. Before inserting the second chip member 14 into the second mold half 144, it may be necessary to pre-form the second chip member 14. Pre-forming the second chip member 14 includes at least configuring the perimeter 32 (refer to Figure 1) to be substantially perpendicular to the planar surface 34 of the chip (refer to Figure 1). The mold 140 may also be warmed to allow the second chip member 14 to substantially conform to the contour of the second mold half 144.

The second chip member 14 may be configured such that the inner surface 28 faces the first chip member 12. The inner surface 28 of the second chip member, in the present embodiment, includes at least the printed machine-readable symbol 30 (depicted as horizontally extending lines along the vertical sidewall 24 of the second chip member 14) and may also include an integrated human-readable symbol 36 (not shown), as previously discussed.

The chip members 12, 14 can be statically retained within mold 40 by applying a vacuum source, identified with the letter "V," to each respective mold half 142, 144. The injection port 146 can be used to transmit the filler material 20 into the zone between the first chip 12 and second chip 14. The filler material 20 injected therein bonds the first chip 12 to the second chip 14. The bonding process may be thermally, chemically, or pressure activated, for example. One skilled in the art may recognize that there are a variety of adequate devices for performing injection-molding operations, to include other mold configurations and means for injecting the filler material into the mold. Therefore, the reference to Figure 7 is for the sole purpose of schematically illustrating a type of apparatus that may be used to produce the gaming chip and the description offered herein is not meant to limit the scope of the invention in any respect.

### METHODS FOR PRODUCING GAMING CHIPS

A process 200 for producing gaming chips can commence with the input of data into the remote computing system 42, either manually or automatically. The input of the data can be guided or controlled by the gaming chip design application 106 discussed above. A host computing system 40 can remotely receive the data where the information can be verified to be within the available manufacturing parameters. If the any changes, additions, or deletions are required based on the check of the information, the data can be returned or the data can be automatically corrected if the changes are minor. If the data is returned, it can be resubmitted and re-verified. From that point, the physical stages of producing the gaming chip can begin as described below.

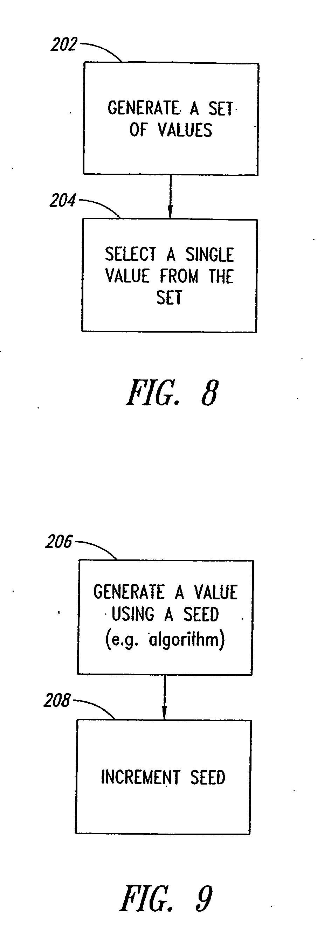

Figures 8-10 illustrate the steps for generating a value that can be encoded into the machine-readable symbol 30; the steps of encrypting and encoding the information that makes up the machine-readable symbol, to include the value; printing at least the machine-readable symbol 30 onto a portion of at least one substrate 38; creating the chip members 12, 14; and structurally bonding the chip members 12, 14 together.

Figures 8 and 9 illustrate two different methods of obtaining or computing a generated value. One skilled in the art will appreciate that the generated value may be a number, symbol, combination of alphanumeric characters, or any other type of character that can be encoded into a machine-readable symbol 30. In step 202 of Figure 8, the computer system 40, discussed above, can be used to generate a set of values. The set of values may be predetermined based on a range of values assigned to a given casino, the set may be randomly selected, the set may consist of an array of seed values, or selected in some other manner. In step 204, the computer system 40 may select a value from the set. The selection process may be random, sequential, or follow some algorithm for selecting a single value from a set of values. The selected value can then be added to the information detailed in step 210.

Alternatively, in step 206, a value may be generated from a seed, where the seed can, in and of itself, identify certain information about a casino, the chip denomination, or other. In step 208, the seed can be incremented to create a series of values. The selected value can then be added to the information detailed in step 210. Although using an incremented seed to generate successive values may yield unique identifiers, it may still be beneficial to test each identifier for uniqueness.

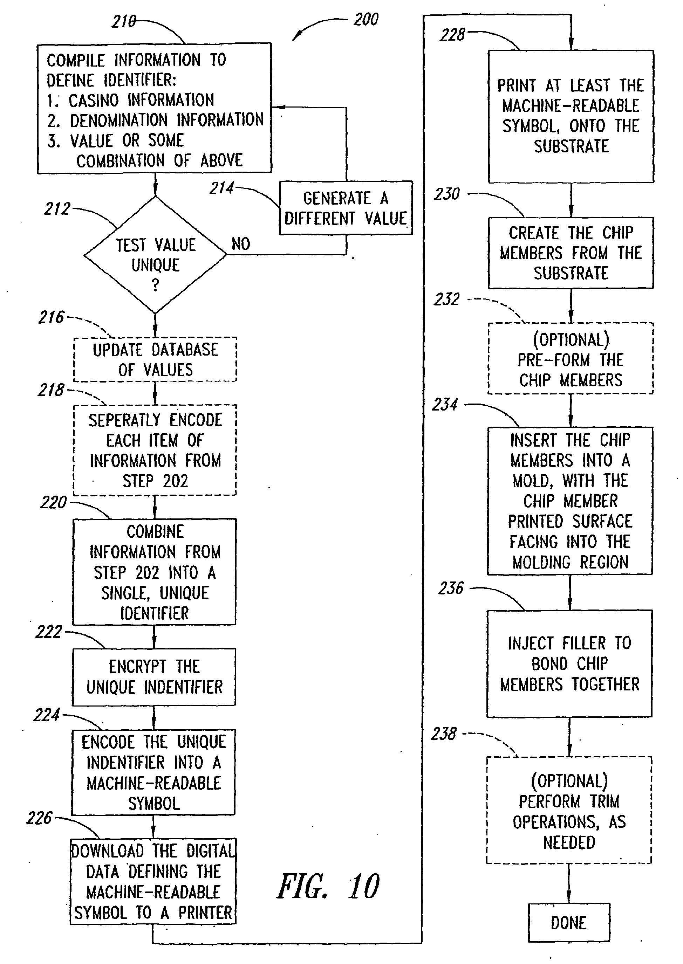

Figure 10 illustrates an overall process 200 for producing the gaming chips 10. In step 210, the generated value from either of steps 204 or 208 can be included with other information. Some of this information may be obtained and downloaded from the previously discussed gaming chip design program 106. Although the information about the casino or the denomination is not necessary to make a uniquely identifiable gaming chip 10, the inclusion of this information may increase the complexity of the machine-readable symbol 30 to further detract counterfeiters and may also be helpful in automatically sorting gaming chips 10 in a hopper at the close of business.

In step 212, the value obtained in step 210 can be tested for whether it is unique. If the value is not unique, then in step 214, a new and different value can be generated and then this value may then be re-included with any other information back in step 210. If the value is unique, then the computing system 40 in step 216 may update a database of "in use" values, for example. "In-use" values are those values that have already been encoded into a previously produced gaming chip 10. However, if the value was generated with a seed and an algorithm, for instance, the value may be inherently unique, thus eliminating the need to test the value in step 212.

In step 218, each item of information obtained in step 202 may, as an option, be separately encoded. The encoding process simply converts identified symbols, characters, or numbers into a corresponding code, for example, letters and numbers are routinely represented with binary data. Separately encoding the information from step 210 may be useful when working with non-standard symbols or graphic designs. The separate and distinct encoding of the information from step 210 allows all the data to be in the same format (*i.e.,* code) before combining the data.

Alternatively, in step 220, the information obtained in step 210 may simply be combined together, without the initial encoding from step 218. The combined information can be strung together, for example, which includes the unique value, thus creating a single, unique identifier. In step 222, the unique identifier can be encrypted for security reasons. The encryption of the unique identifier may be more efficient if the information to be encrypted is all in the same format. As one skilled in the art will appreciate, there are a variety of encryption techniques and levels of security associated with the different techniques. The encryption techniques employed herein are those that are known in the art.

In step 224, the unique identifier can be encoded or converted into a machine-readable symbol 30. The encoding of the machine-readable symbol 30 can be controlled by the desired print quality, symbology standards, and if applicable, application (*e.g.*, a particular industry that has developed a subset of print or symbology standards) standards. For example, one type of machine-readable symbol 30 is a one-dimensional ("1-D") barcode symbology (*i.e.,* Code39, UPC/EAN, or 93I). The 1-D symbology may be repeatedly printed at least on the perimeter 32 of the chip members 12, 14. The machine-readably symbol 30 may also be a two-dimensional "area" or "array" symbol. In step 226, the digital (*e.g.,* electronic) data defining the machine-readable symbol 30 can be downloaded, sent, or transmitted to a printing device. The printing device may be configured to accept a substrate and in step 228, the printing device can print at least a machine-readable symbol 30 onto the substrate surface. For example, the printer may thermally print using ultraviolet or infrared ink. One skilled in the art will appreciate that there are a large variety of techniques to print machine-readable symbols 30, and the computing system 40 can select an appropriate printing , technique based on the substrate material, the desired print time, desired resolution and other parameters. A suitable resolution in some embodiments may be approximately 600 dpi. In addition, step 228 is not limited to merely printing machine-readable symbols, but also includes the printing of a human-readable symbol 36 as well. The human-readable symbol 36 can be a series of colors or patterns that distinguish a certain denomination of the gaming chip, the logo of the casino, advertising messages, monograms, or any other graphical text, numeric, or holographic illustration. -

In step 230, the chip members 12, 14 can be created from the substrate. The chip members 12, 14 may be die-cut, stamped or similarly created from the substrate 38. Optionally, the chip members 12, 14 may be pre-formed to shape the chip members 12, 14 into a complementary configuration for insertion into the mold 140. For example, the pre-forming process can convert the chip members 12, 14 from having a disk shape to having a cap or cup shape.

In step 232, the chip members 12, 14 may be inserted into the mold 140. Recalling that the machine-readable symbol 30 should remain on the inner surface 26, 28 of one or both chip members 12, 14, the chip members 12, 14 can be inserted into the mold 140 such that the printed surface of the chip member 12, 14 faces into a mold region, which is the region defined by the opposing mold halves 142, 144. In step 234, filler material 20 can be injected into the mold 140 to bond the chip members 12, 14 together. The molding and injection steps 232, 234 may also include increasing the temperature and/or pressure in the mold 140 to structurally integrate the various components of the gaming chip 10.

Step 238 represents an optional step for performing any trimming or cosmetic operations. For example, the access locations 146 may be filled or covered, beveled edges 22 can be machined at the chip corners, any molding draft lines can be trimmed off, or the gaming chip 10 may be polished.

An important aspect of the illustrated process is to allow a producer of gaming chips 10 to quickly and inexpensively produce a plurality of gaming chips 10 wherein each gaming chip is encoded with a unique identifier. One significant advantage of the process 200 is that the resulting gaming chip 10 is structurally integrated due to the bonding that occurs between the respective gaming chip components. Another advantage of the process 200 is that the machine-readable symbol 30 is embedded within the interior of the chip (*i.e.,* printed on the inner surface 26, 26 of the substrate 38) while the machine-readable symbol 30 remains readable through the transparent substrate from the exterior of the chip 10. The embedding of the machine-readably symbol 30 within the structurally integrated gaming chip 10 makes the chip more tamper and counterfeit resistant while also creating a durable exterior surface that can be worn, touched, or scratched without damaging the embedded machine-readable symbol 30.

### ALTERNATE GAMING CHIP PRODUCTS AND METHODS OF MAKING SAME

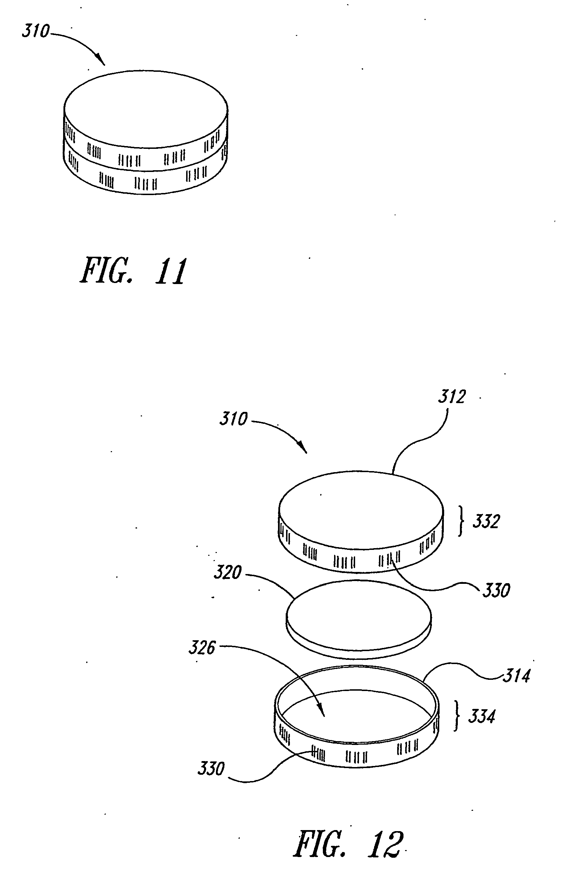

Figures 11 and 12 illustrate another embodiment of a casino gaming chip 310. Due to the substantial similarities between this alternate embodiment and the previous embodiment, only the differences will be described; all other features and methods remain unchanged. In the present embodiment either or both chip members 312, 314 configured to have the cap or cup shaped, which can be accomplished in part by pre-forming the chip members 312, 314 after the chip members 312, 314 have been cut from their respective substrates 38. Each of the chip members 312, 314 can have one or more machine-readable symbols 330 printed on their respective inner surface 326, 328 (not shown), and can be bonded together with filler material 320.

The bonding of the chip members 312, 314 may be done such that the machine-readable symbols 330 located on the first vertical sidewall 332 first chip member 312 are rotatably offset with respect to the machine-readable symbols located on the second vertical sidewall 334 of the second chip member 314. For example, if each chip member 312, 314 has a repeating pattern of machine-readable symbols (*e.g.*, barcode symbols) on the vertical sidewalls 332, 334, respectively, the chip members 312, 314 can be aligned such that the barcode lines, for example, of the first chip member 312 do not vertically align with the barcode lines of the second chip member 314. The purpose of staggering the machine-readable symbols 330 is to enhance the probability that a scanner or optical sensor can acquire a successful first read of the gaming chip 310 from a remote distance on a gaming table.

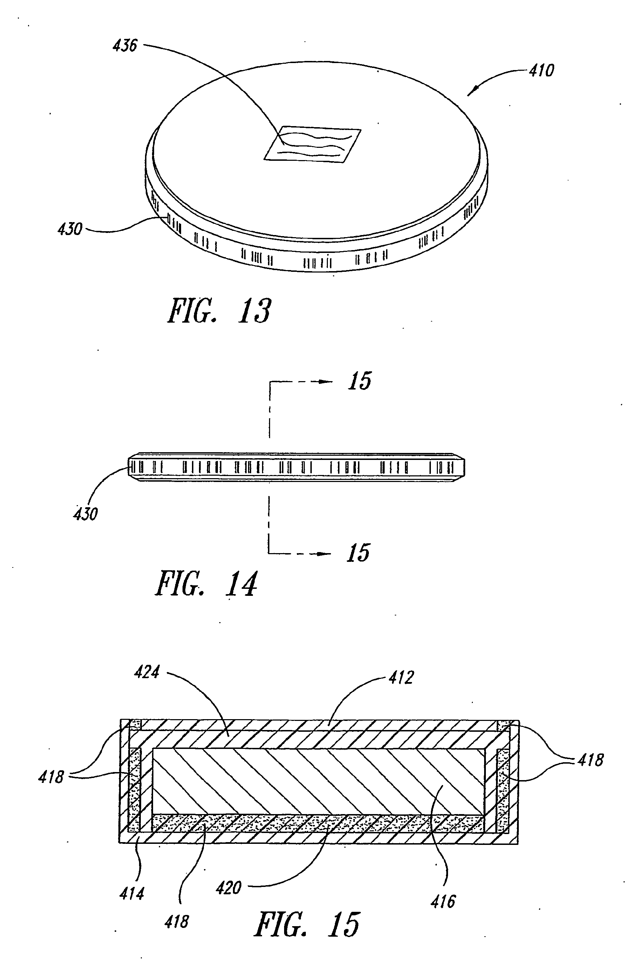

Figures 13-16 illustrate still another embodiment of the casino gaming chip 410. The gaming chip 410 includes many of the features of the first embodiment, but also adds some additional features to make the gaming chip 410 more robust, structurally durable, and possibly easier to produce. The present embodiment includes a center chip member 416 centrally embedded within the gaming chip, augmented by an alignment member 424 and filler material 418, 420. The second chip member 414 of the present embodiment includes the machine-readable symbol 430.

The center chip member 416 may be a plastic slug made from a high specific gravity material with an over-molded cover. The cover may be made from a soft, over-molded thermoplastic elastomer such as SANTOPRENE®, available from the Monsanto Corporation, or TEKBOND®, available from the Teknor Apex Corporation. The center chip 416 may also be a pre-molded metal (*e.g.*, brass) slug. The purpose of including the center chip member 416 is to provide the gaming chip 410 with more weight. Many casino patrons prefer a chip that is comparably weighted to old-style clay chips. One skilled in the art will recognize that any of the embodiments herein may employ a plastic or metal slug between the respective chip members.

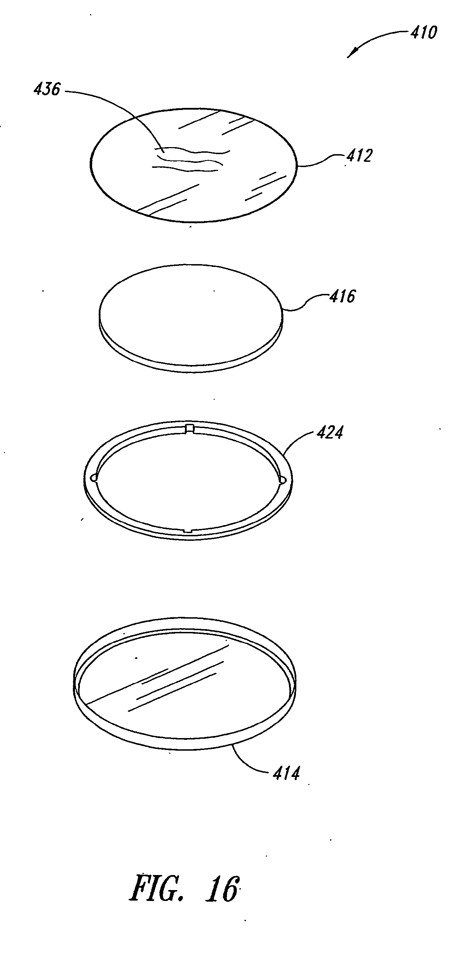

Referring to Figures 15 and 16, the illustrated embodiment further includes an alignment member 424 for aligning the first chip member 412 with the second chip member 414 and for centrally locating the center chip member 416, particularly when the chip members include printed human-readable symbols 436. For example, if the printed human-readable symbol 436 on each chip member 412, 414 were a picture of the casino, it may be desirable to align the chip members such that a viewer of the chip 410 would see the upright picture of the casino on one substantially planar surface of the chip, and after flipping the chip over by a 180°, the viewer would again see the casino in an upright manner, instead of seeing an upside down or angled picture. The alignment member 424 may include protuberances and/or slots, or similar alignment features that complementarily engage with at least one of the center chip member 416, first chip member 412, second chip member 414, or some combination thereof. The alignment member 424 may be made from the same material as the chip members 412, 414 or some other type of material that can adequately bond with the filler material 418, 420.

The gaming chip 410 may further include a second filler 418. The second filler 418 can be used to pre-assemble the chip members 412, 414, the center chip member 416, and the alignment member 424. In particular, the second filler 418 may be used to stabilize the center chip member 416 centrally and symmetrically relative to the chip members 412, 414 before the filler material 420 is injected therein.

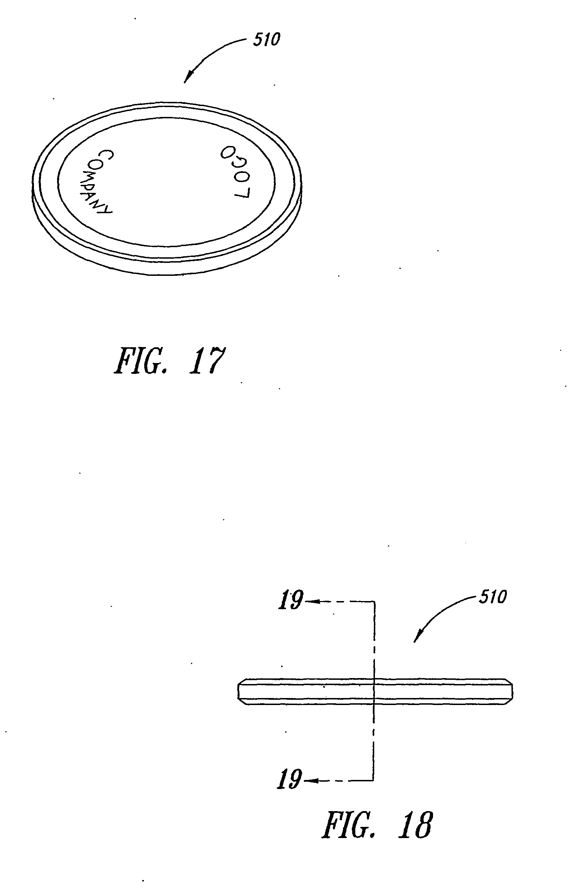

Figures 17-21 illustrate another embodiment of the casino gaming chip 510. The gaming chip 510 includes a center chip member 516 centrally embedded between a pre-formed first chip member 512 and a pre-formed second chip member 514. The center chip member 516 may be an over-molded plastic slug made from a specialty high specific gravity material. The center chip 516 may also be a pre-molded metal (*e.g.,* brass) slug. Again, the purpose of including the center chip member 516 is to provide the gaming chip 510 with more weight.

The first and second chip members 512, 514 can be pre-formed into the desired shape. The second chip member 514 can be formed with a recessed region 540 for receiving the center chip member 516. The second chip member 514 may also have an interlocking pattern 542 for complementarily engaging the first chip member 512. The first chip member 512 can be pre-formed in a similar manner. The first and second chip members 512, 514 can be made from a variety of materials such as Polycarbonate, LEXAN® - available from the General Electric Company, Polyester, polystyrene, MYLAR® - available from DuPont Teijin Films, Ltd., vinyl, LUCITE® - available from ICI Acrylics Inc., acrylic, or other similar plastic or composite materials.

A substrate band 524 can be bonded to the perimeter of the chip 510. The substrate band 524 can have a machine-readable symbol 530 printed on its inner surface 526. The machine-readable symbol 530 may also be repeatedly printed on the substrate band inner surface 526. The gaming chip 510 may also include decals 518 that can be adhered to the exterior, horizontal surfaces of the gaming chip for decorative or aesthetic purposes. The inner surfaces of the decals 518 may have a printed human-readable symbol 536.

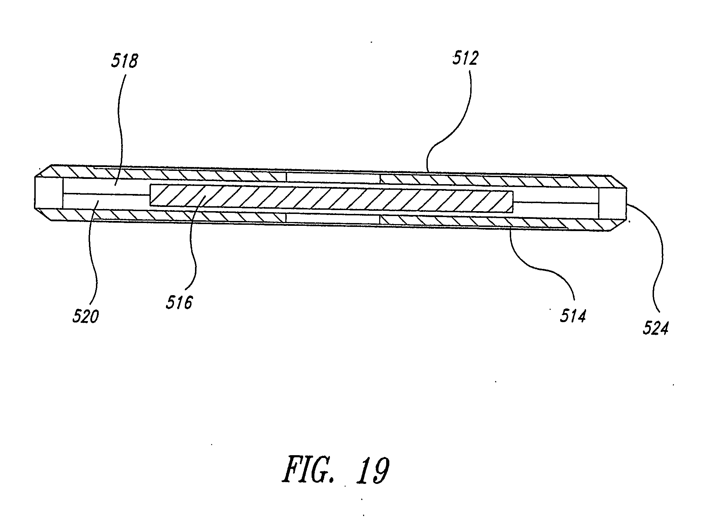

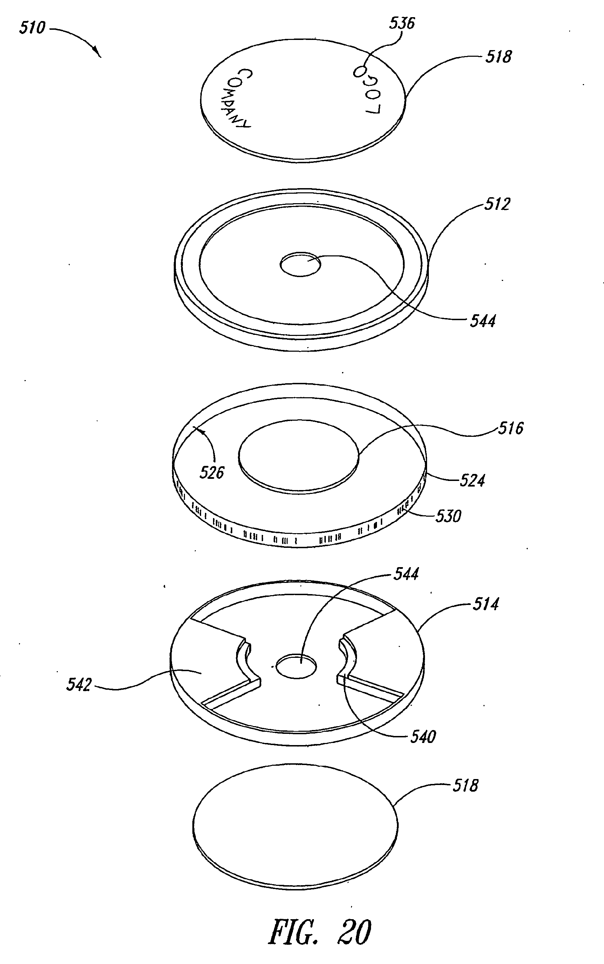

Referring to Figures 19 and 20, the first and second chip members 512, 514 can be pre-formed with the recessed region 540 configured to receive the center chip member 516 and configured with complementary interlocking features for connection to the opposing chip member. The pre-formed chip members include an access location 544 for receiving the filler material 520.

In the particular embodiment, the interlocking features of the respective chip members may substantially fill the space within the interior region of gaming chip 510. As such, the filler material 520 can be an adhesive, for example a temperature-activated adhesive that can be injected to substantially wet the facing surfaces of the center chip member 516, the first chip member 512, the second chip member 514, and the substrate band 524. Alternatively, the interlocking features may not take up much space within the interior region of the gaming chip 510 and filler material 520 can be used to bond the respective members together. As a finishing step, decals 518 may be added to cover any injection ports 544 or solely for decoration purposes. Conversely, the decals 518 may be included in the molding process such that the decals 518 become structurally bonded with the first and second chip members 512, 514, respectively.

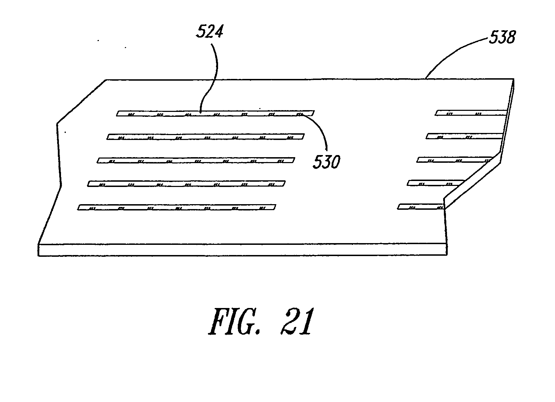

Figure 21 illustrates the printing of the machine-readable symbol 530 onto the substrate 538. The substrate band 524 can then be cut from the substrate 538 and configured for assembly with the first and second chip members 512, 514. The printed machine-readable symbol 530 is on the inner surface 526 of the substrate band 524 during assembly.

Although specific embodiments of, and examples for, the invention are described herein for illustrative purposes, various equivalent modifications can be made without departing from the spirit and scope of the invention, as will be recognized by those skilled in the relevant art. The various embodiments described above can be combined to provide further embodiments. Aspects of the invention can be modified, if necessary, to employ systems, circuits and concepts of the various patents, applications and publications to provide yet further embodiments of the invention.

These and other changes can be made to the invention in light of the above-detailed description. In general, in the following claims, the terms used should not be construed to limit the invention to the specific embodiments disclosed in the specification and the claims, but should be construed to include all imaging and illumination systems and methods that operate in accordance with the claims. Accordingly, the invention is not limited by the disclosure, but instead its scope is to be determined entirely by the following claims.

## Claims

1. A method to produce gaming chips (10), the method comprising:
providing a first chip member (12) having an exterior surface and an interior surface (26) opposed to the exterior surface, the interior surface (26) of the first chip member (12) forming a cavity and bearing at least one unique identifier (30); and
injecting a filler material in the cavity formed by the interior surface (26) of the first chip member (12) to seal the at least one unique identifier in the cavity of the first chip member (12), the first chip member (12) being sufficiently transparent that the at least one unique identifier is optically readable through the exterior surface of the first chip member (12).

2. The method of claim 1, further comprising:
providing a second chip member (14) having an exterior surface and an interior surface (28) opposed to the exterior surface; and
positioning the second chip member (14) across at least a portion of the cavity formed by the interior surface (26) of the first chip member (12) before filling the cavity.

3. The method of claim 1, further comprising:
providing a second chip member (14) having an exterior surface and an interior surface (28) opposed to the exterior surface; and
binding the second chip member (14) across at least a portion of the cavity formed by the interior surface (26) of the first chip member (12).

4. The method of claim 1, further comprising:
providing a second chip member (14) having an exterior surface and an interior surface (28) opposed to the exterior surface; and
binding the second chip member (14) across at least a portion of the cavity formed by the interior surface (26) of the first chip member (12) via the filling of the cavity.

5. The method of claim 1, further comprising: .
providing a second chip member (14) having an exterior surface and an interior surface (28) opposed to the exterior surface, the interior surface (28) of the second chip member (14) forming a cavity and bearing at least one indicia; and
filling the cavity formed by the interior surface (28) of the second chip member (14) to bind the second chip member (14) to the first chip member (12) with the respective cavities of the first and the second chip members opposed to one another.

6. The method of claim 1 wherein filling the cavity formed by the interior surface (26) of the first chip member (12) comprises injecting a chemically bondable filler material (20).

7. The method of claim 1 wherein filling the cavity formed by the interior surface (26) of the first chip member (12) comprises:
injecting a thermally bondable filler material (20), and
heating the thermally bondable filler material (20).

8. The method of claim 1, further comprising:
printing at least a first machine-readable symbol (30) encoding the unique identifier (31) on at least a portion of a first surface (26) of a substrate (38);
cutting a piece from the substrate (38), the piece including the first machine-readable symbol (30) encoding the unique identifier; and
forming the piece to create the first chip member (12), the first surface (26) of the substrate (38) constituting the interior surface (26) of the first chip member (12).

9. The method of claim 1, further comprising:
providing a slug (416) at least partially in the cavity formed by the interior surface (26) of the first chip member (12) before filling the cavity.

10. The method of claim 1, further comprising:
providing a slug (416) formed of at least one of metal and glass at least partially in the cavity formed by the interior surface (26) of the first chip member (12) before filling the cavity.

11. The method of claim 1 wherein the first chip member (12) forming a cavity includes configuring the first chip member (12) to form a continuous band (524).

12. A method to produce gaming chips (10), the method comprising:
providing a first chip member (12) having an approximately planar portion (34) and a perimeter edge (32) extending perpendicularly from a perimeter of the planar portion (34), the perimeter edge (32) bearing at least one machine-readable symbol (30) encoding a unique identifier;
providing a second chip member (14) having an approximately planar portion (34); and
adhering the second chip member (14) to the first chip member (12) by injecting a filler material to seal the at least one machine-readable symbol (30) encoding the unique identifier within the gaming chip (10), the first chip member (12) being sufficiently transparent such that the at least one machine-readable symbol (30) encoding the unique identifier is optically readable from outside the gaming chip (10).

13. The method of claim 12 wherein providing a first chip member (10) and providing a second chip member (14) comprises positioning each of the first and the second chip members (12, 14) in a mold (140), and wherein adhering the second chip member (14) to the first chip member (12) comprises injecting a bonding material (20) into the mold (140).

14. The method of claim 12 wherein providing a first chip member (12) and providing a second chip member (14) comprises positioning each of the first and the second chip members (12, 14) in a mold (140), and wherein adhering the second chip member (14) to the first chip member (12) comprises injecting a bonding material (20) into the mold (140) between the first and the second chip members (12, 14).

15. The method of claim 12, further comprising:
printing a plurality of machine-readable symbols (30) on a substrate (38), a number of the machine-readable symbols (30) encoding a respective unique identifier;
cutting a piece from the substrate (38), the piece including at least one of the machine-readable symbols (30) encoding the unique identifier; and
forming the perimeter edge (32) on the piece to produce the first chip member (12); and
cutting the second chip member (14) from the substrate (38).

16. The method of claim 12, further comprising:
printing a plurality of machine-readable symbols (30) on a substrate (38), a number of the machine-readable symbols (30) encoding a respective unique identifier;
cutting a piece from the substrate (38), the piece including at least one of the machine-readable symbols (30) encoding the unique identifier; and
forming the perimeter edge (32) on the piece to produce the first chip member (12); and
cutting the second chip member (14) from a second substrate(38).

17. The method of claim 12, further comprising:
providing a center chip member (416) made from a high specific gravity material between the first and second chip members (12, 14) before adhering the second chip member (14) to the first chip member (12).

18. The method of claim 12, further comprising:
providing an alignment member (424) between the first and second chip members (12, 14) before adhering the second chip member (14) to the first chip member (12).

19. A method to produce gaming chips (10) on at least a first substrate (38), the method comprising:
printing at least a machine-readable symbol (30) on a plurality of regions on a first surface (26, 28) of at least the first substrate (38), the machine-readable symbol (30) encoding an identifier that uniquely identifies the gaming chip (10);
creating at least one chip member (12, 14) from the first substrate (38), the chip member (12, 14) having an inner and an outer surface, at least the one chip member (12, 14) bearing the machine-readable symbol (30) on the inner surface (26, 28) thereof;
creating another chip member (12, 14);
positioning at least one chip member (12, 14) in a back-to-back relationship with another chip member (12, 14) such that the respective inner surface (26, 28) bearing the machine- readable symbol (30) is located within the chip member; and
cohering the one chip member (12, 14) with another chip member (12, 14) by injecting a filler material such that the machine-readable symbol (30) on at least the one chip member (12, 14) is optically readable from a location external to the gaming chip (10).

20. The method of claim 19 wherein printing includes printing a number of machine-readable symbols (30) about a perimeter (32) of at least one of the regions of the first substrate (38).

21. The method of claim 19 wherein printing at least the machine- readable symbol (30) includes printing with an invisible ink.

22. The method of claim 19 wherein printing at least the machine- readable symbol (30) includes printing a mathematically pre-distorted machine-readable symbol (31).

23. The method of claim 19 wherein creating at least one chip member (12, 14) includes defining a geometric shape, the geometric shape having a boundary around at least one of the regions of the first substrate (38) bearing the machine-readable symbol (30), and removing the geometric shape from the first substrate (38).

24. The method of claim 19 wherein creating another chip member (12, 14) includes defining a geometric shape, the geometric shape having a boundary around at least one of the regions of the first substrate (38) bearing the machine-readable symbol (30), and removing the geometric shape from the first substrate (38).

25. The method of claim 19 wherein creating another chip member (12, 14) includes defining a geometric shape, the geometric shape having a boundary around at least one of the regions of a second substrate (38), and removing the geometric shape from the second substrate (38).

26. The method of claim 22 wherein creating at least the one chip member (12, 14) includes defining the geometric shape, the geometric shape having an interior region and an exterior region, the exterior region extending from the boundary defined by the geometric shape toward the interior region, the exterior region bearing the machine-readable symbol (30).

27. The method of claim 24 wherein creating the at least one chip member (12, 14) includes forming the exterior regions of the chip member to extend approximately perpendicular to the interior regions of the chip member.

28. The method of claim 19, further comprising:
printing an indicia on at least the region on the first surface (26, 28) of the first substrate (38).

29. The method of claim 28 wherein printing the indicia includes printing a human-readable symbol (36) comprising at least one of letters, numbers, pictures, graphics, and holograms.

30. The method of claim 28 wherein printing the indicia includes printing a human-readable symbol (36) comprising a set of personalized information.

31. The method of claim 28 wherein creating the chip members (12, 14) includes defining a geometric shape to encompass the indicia.

32. The method of claim 28 wherein printing the indicia includes the human-readable symbol (36) being digitally integrated with the machine-readable symbol (30).

33. The method of claim 19 wherein positioning the chip members (12, 14) further includes positioning a center chip member (416) between the chip members (12, 14).

34. The method of claim 24 wherein positioning the chip members (12, 14) further includes aligning the machine-readable symbols (30) on the one chip member (12, 14) with respect to the machine-readable symbols (30) on another chip member (12, 14).

35. The method of claim 24 wherein positioning the chip members (12, 14) further includes offsetting the machine-readable symbols (30) on the one chip member (12, 14) with respect to the machine-readable symbols (30) on another chip member (12, 14).

36. A method to produce a uniquely identifiable gaming chip (10), the method comprising:
receiving digital data defining a chip request from a remote location, at least a portion of the digital data comprising game chip design data;
digitally encoding a unique identifier into a machine-readable symbol (30);
printing the machine-readable symbol (30) onto at least a first region (26, 28) of at least one substrate (38);
printing an indicia defined by the digital data onto at least a second region (26, 28) of the at least one substrate (38); and
forming at least a first gaming chip (12, 14) from the at least one substrate (38) with the machine-readable symbol (30) and the indicia residing in an interior of the gaming chip (10) and optically readable from outside the gaming chip.

37. The method of claim 36, further comprising:
delivering the gaming chip (10) to a remote location.

38. The method of claim 36 wherein receiving digital data defining a chip request from a remote location comprises receiving the unique indicia as part of the digital data.

39. The method of claim 36, further comprising:
locally generating the unique identifier.

40. The method of claim 36 wherein receiving digital data defining a chip request from a remote location comprises remotely receiving an indication of a desired denomination and a desired quantity of gaming chips as part of the digital data.

41. The method of claim 36, further comprising:
encrypting the unique identifier before the digitally encoding.

## Patentansprüche

1. Verfahren zur Herstellung von Spielchips bzw. Spieljetons (10), wobei das Verfahren umfasst:
Bereitstellen eines ersten Chipelementes (12) mit einer Außenfläche und einer Innenfläche (26), welche der Außenfläche gegenüberliegt, wobei die Innenfläche (26) des ersten Chipelementes einen Hohlraum bildet und wenigstens einen eindeutigen Identifikator (30) trägt; und
Einspeisen bzw. Einspritzen eines Füllmaterials in den Hohlraum, welcher durch die Innenfläche (26) des ersten Chipelementes (12) gebildet wird, um dem wenigstens einen eindeutigen Identifikator in dem Hohlraum des ersten Chipelementes (12) abzukapseln bzw. abzudichten, wobei das erste Chipelement (12) ausreichend durchsichtig ist, dass der wenigstens eine eindeutige Identifikator optisch durch die Außenfläche des ersten Chipelementes (12) lesbar ist.

2. Verfahren nach Anspruch 1, des Weiteren umfassend:
Bereitstellen eines zweiten Chipelementes (14) mit einer Außenfläche und einer Innenfläche (28), welche der Außenfläche gegenüberliegt; und
Anordnen des zweiten Chipelementes (14) über wenigstens einem Bereich des Hohlraums, welcher durch die Innenfläche (26) des ersten Chipelementes (12) gebildet wird, bevor der Hohlraum aufgefüllt wird.

3. Verfahren nach Anspruch 1, des Weiteren umfassend:
Bereitstellen eines zweiten Chipelementes (14) mit einer Außenfläche und einer Innenfläche (28), welche der Außenfläche gegenüberliegt; und
Verbinden des zweiten Chipelementes (14) über wenigstens einen Bereich des Hohlraums, welcher durch die Innenfläche (26) des ersten Chipelementes (12) gebildet wird.

4. Verfahren nach Anspruch 1, des Weiteren umfassend:
Bereitstellen eines zweiten Chipelementes (14) mit einer Außenfläche und einer Innenfläche (28), welche der Außenfläche gegenüberliegt; und
Verbinden des zweiten Chipelementes (14) über wenigstens einen Teil des Hohlraums, welcher von der Innenfläche (26) des ersten Chipelementes (12) gebildet wird, durch Füllen des Hohlraums.

5. Verfahren nach Anspruch 1, des Weiteren umfassend:
Bereitstellen eines zweiten Chipelementes (14) mit einer Außenfläche und einer Innenfläche (28), welche der Außenfläche gegenüberliegt, wobei die Innenfläche (28) des zweiten Chipelementes (14) einen Hohlraum bildet und wenigstens ein Zeichen trägt; und
Auffüllen des Hohlraums, welcher durch die Innenfläche (28) des zweiten Chipelementes (14) gebildet wird, um das zweite Chipelement (14) an das erste Chipelement (12) zu binden, wobei die jeweiligen Hohlräume des ersten und zweiten Chipelementes einander gegenüber liegen.

6. Verfahren nach Anspruch 1, wobei das Auffüllen des Hohlraums, welcher durch die Innenfläche (26) des ersten Chipelementes (12) gebildet wird, das Einspritzen eines chemisch bindbaren Füllmaterials (20) umfasst.

7. Verfahren nach Anspruch 1, wobei das Füllen des Hohlraums, welcher durch die Innenfläche (26) des ersten Chipelementes (12) gebildet wird, umfasst:
Einspritzen eines thermisch bindbaren Füllmaterials (20), und
Erwärmen des thermisch bindbaren Füllmaterials (20).

8. Verfahren nach Anspruch 1, des Weiteren umfassend:
Drucken wenigstens eines ersten maschinenlesbaren Symbols (30), welches den eindeutigen Identifikator (31) auf wenigstens einer Oberfläche einer ersten Oberfläche (26) eines Substrates (38) verschlüsselt;
Schneiden eines Teils aus dem Substrat (38), wobei das Teil das erste maschinenlesbare Symbol (30) umfasst, welches den einzigartigen Identifikator verschlüsselt; und
Formen des Teils, um das erste Chipelement (12) zu erzeugen, wobei die erste Oberfläche (26) des Substrats (38) die Innenfläche (26) des ersten Chipelementes (12) bildet.

9. Verfahren nach Anspruch 1, des Weiteren umfassend:
Bereitstellen eines Rohlings (416) wenigstens teilweise in dem Hohlraum, welcher von der Innenfläche des ersten Chipelementes gebildet wird, bevor der Hohlraum gefüllt wird

10. Verfahren nach Anspruch 1, des Weiteren umfassend:
Bereitstellen eines Rohlings (416), gebildet aus wenigstens einem aus Metall und Glas,
wenigstens teilweise in dem Hohlraum, welcher von der Innenfläche (26) des ersten Chipelementes (12) gebildet wird, bevor der Hohlraum gefüllt wird.

11. Verfahren nach Anspruch 1, wobei das erste Chipelement (12), welches einen Hohlraum bildet, das Gestalten des ersten Chipelementes (12) umfasst, um ein kontinuierliches Band (524) zu bilden.

12. Verfahren zur Herstellung von Spielchips bzw. Spieljetons (10), wobei das Verfahren umfasst:
Bereitstellen eines ersten Chipelementes (12) mit einem im Wesentlichen planaren Bereich (34) und einer Umfangskante (33), welche sich senkrecht von einem Umfang des planaren Bereiches (34) erstreckt, wobei die Umfangskante (32) wenigstens ein maschinenlesbares Symbol (30) trägt, welches einen eindeutigen Identifikator verschlüsselt;
Bereitstellen eines zweiten Chipelementes (14) mit einem im Wesentlichen planaren Bereich (34);
Kleben des zweiten Chipelementes (14) an das erste Chipelement (12) durch Einspritzen eines Füllmaterials, um das wenigstens eine maschinenlesbare Symbol (30), welches den eindeutigen ldentifikator innerhalb des Spielchips (10) verschlüsselt, abzudichten, wobei das erste Chipelement (12) ausreichend durchsichtig ist, so dass das wenigstens eine maschinenlesbare Symbol (30), welches den eindeutigen Identifikator verschlüsselt, optisch von außerhalb des Spielchips (10) lesbar ist.

13. Verfahren nach Anspruch 12, wobei das Bereitstellen eines ersten Chipelementes (10) und das Bereitstellen eines zweiten Chipelementes (14) das Positionieren jedes der ersten und zweiten Chipelemente (12, 14) in einer Form (140) umfasst, und wobei das Kleben des zweiten Chipelementes (14) an das erste Chipelement (12) das Einspritzen eines Bindematerials (20) in die Form (140) umfasst.

14. Verfahren nach Anspruch 12, wobei das Bereitstellen eines ersten Chipelementes (12) und das Bereitstellen eines zweiten Chipelementes (14) das Positionieren jedes des ersten und zweiten Chipelementes (12, 14) in einer Form (140) umfasst, und wobei das Kleben des zweiten Chipelementes (14) an das erste Chipelement (12) das Einspritzen eines Bindematerials (20) in die Form (140) zwischen das erste und das zweite Chipelement (12, 14) umfasst.

15. Verfahren nach Anspruch 12, des Weiteren umfassend:
Drucken einer Vielzahl von maschinenlesbaren Symbolen (30) auf ein Substrat (38), wobei eine Anzahl von maschinenlesbaren Symbolen (30) einen jeweiligen eindeutigen Identifikator verschlüsselt;
Schneiden eines Teils aus dem Substrat (38), wobei das Teil wenigstens eines der maschinenlesbaren Symbole (30) umfasst, welche den eindeutigen Identifikator kodieren; und
Bilden der Umfangskante (32) auf dem Teil, um das erste Chipelement (12) zu bilden; und
Schneiden des zweiten Chipelementes (14) aus dem Substrat (38).

16. Verfahren nach Anspruch 12, des Weiteren umfassend:
Drucken einer Vielzahl von maschinenlesbaren Symbolen (30) auf ein Substrat (38), wobei eine Anzahl der maschinenlesbaren Symbole (30) einen jeweiligen eindeutigen Identifikator codieren;
Schneiden eines Teils aus dem Substrat (38), wobei das Teil wenigstens eines der maschinenlesbaren Symbole (30) umfasst, welche den eindeutigen Identifikator codieren; und
Bilden der Umfangskante (32) auf dem Teil, um das erste Chipelement (12) zu bilden; und
Schneiden des zweiten Chipelementes (14) aus einem zweiten Substrat (38).

17. Verfahren nach Anspruch 12, des Weiteren umfassend:
Bereitstellen eines mittleren Chipelementes (416), hergestellt aus einem Material mit hoher spezifischer Dichte zwischen dem ersten und zweiten Chipelement (12, 14), bevor das zweite Chipelement an das erste Chipelement (12) geklebt wird.

18. Verfahren nach Anspruch 12, des Weiteren umfassend:
Bereitstellen eines Ausrichtungselementes (424) zwischen dem ersten und zweiten Chipelement (12, 14), bevor das zweite Chipelement (14) an das erste Chipelement (12) geklebt wird.

19. Verfahren zur Herstellung von Spielchips (10) auf wenigstens einem ersten Substrat (38), wobei das Verfahren umfasst:
Drucken wenigstens eines maschinenlesbaren Symbols (30) auf einer Vielzahl von Regionen auf einer ersten Oberfläche (26, 28) wenigstens des ersten Substrats (38), wobei das maschinenlesbare Symbol (30) einen Identifikator verschlüsselt, welcher den Spielchip (10) eindeutig identifiziert;
Erzeugen wenigstens eines Chipelementes (12, 14) aus dem ersten Substrat (38), wobei das Chipelement (12, 14) eine Innen- und eine Außenfläche aufweist, wobei das wenigstens eine Chipelement (12, 14) das maschinenlesbare Symbol (30) auf seiner Innenfläche (26, 28) trägt;
Erzeugen eines weiteren Chipelementes (12, 14);
Anordnen des wenigstens einen Chipelementes (12, 14) in einer Back-to-Back-Beziehung mit einem anderen Chipelement (12, 14), so dass die jeweilige Innenfläche (26, 28), welche das maschinenlesbare Symbol (30) trägt, innerhalb des Chipelementes angeordnet ist; und
Zusammenhängen des einen Chipelementes (12, 14) mit einem anderen Chipelement (12, 14) durch Einspritzen eines Füllmaterials, so dass das maschinenlesbare Symbol (30) auf dem wenigstens einen Chipelement (12, 14) optisch von einem Ort außerhalb des Spielchips (10) lesbar ist.

20. Verfahren nach Anspruch 19, wobei das Drucken das Drucken einer Anzahl von maschinenlesbaren Symbolen (30) auf einen Umfang (32) wenigstens eines Bereichs des ersten Substrats (38) umfasst.

21. Verfahren nach Anspruch 19, wobei das Drucken wenigstens des maschinenlesbaren Symbols (30) das Drucken mit unsichtbarer Tinte umfasst.

22. Verfahren nach Anspruch 19, wobei das Drucken wenigstens des maschinenlesbaren Symbols (30) das Drucken eines mathematisch vorverzerrten maschinenlesbaren Symbols (31) umfasst.

23. Verfahren nach Anspruch 19, wobei das Erzeugen wenigstens eines Spielchips (12, 14) das Definieren einer geometrischen Form umfasst, wobei die geometrische Form eine Grenze um wenigstens einen der Bereiche des ersten Substrats (38) aufweist, welches das maschinenlesbare Symbol (30) trägt, und das Entfernen der geometrischen Form von dem ersten Substrat (38).

24. Verfahren nach Anspruch 19, wobei das Erzeugen eines weiteren Chipelementes (12, 14) das Definieren einer geometrischen Form umfasst, wobei die geometrische Form eine Grenze um wenigstens einen der Bereiche des ersten Substrats (38) aufweist, welches das maschinenlesbare Symbol (30) trägt, und das Entfernen der geometrischen Form von dem ersten Substrat (38).

25. Verfahren nach Anspruch 19, wobei das Erzeugen eines weiteren Chipelementes (12, 14) das Definieren einer geometrischen Form umfasst, wobei die geometrische Form eine Grenze um wenigstens einen der Bereiche eines zweiten Substrats (38) aufweist, und Entfernen der geometrischen Form von dem zweiten Substrat (38).

26. Verfahren nach Anspruch 22, wobei das Erzeugen des wenigstens einen Chipelementes (12, 14) das Definieren der geometrischen Form umfasst, wobei die geometrische Form einen Innenbereich und einen Außenbereich aufweist, sich der Außenbereich von der Grenze, welche durch die geometrische Form definiert wird, zu dem Innenbereich erstreckt, und der Außenbereich das maschinenlesbare Symbol (30) trägt.

27. Verfahren nach Anspruch 24, wobei das Erzeugen des wenigstens einen Chipelementes (12, 14) das Formen von Außenbereichen des Chipelementes umfasst, um sich im Wesentlichen senkrecht zu den Innenbereichen des Chipelementes zu erstrecken.

28. Verfahren nach Anspruch 19, des Weiteren umfassend:
Drucken eines Zeichens auf wenigstens den Bereich der ersten Oberfläche (26, 28) des ersten Substrats (38).

29. Verfahren nach Anspruch 28, wobei das Drucken des Zeichens das Drucken eines vom Menschen lesbaren Symbols (36) umfasst, umfassend wenigstens eines aus Buchstaben, Zahlen, Bildern, Grafiken und Hologrammen.

30. Verfahren nach Anspruch 28, wobei das Drucken der Zeichen das Drucken eines vom Menschen lesbaren Symbols (36) umfasst, umfassend einen Satz personalisierter Informationen.

31. Verfahren nach Anspruch 28, wobei das Erzeugen der Chipelemente (12, 14) das Definieren einer geometrischen Form umfasst, um das Zeichen einzuschließen.

32. Verfahren nach Anspruch 28, wobei das Drucken des Zeichens das vom Menschen lesbare Symbol (36) umfasst, welches digital mit dem maschinenlesbaren Symbol (30) integriert ist.

33. Verfahren nach Anspruch 19, wobei das Anordnen der Chipelemente (12, 14) des Weiteren das Anordnen eines Mittelchipelementes (416) zwischen den Chipelementen (12, 14) umfasst.

34. Verfahren nach Anspruch 24, wobei das Anordnen der Chipelemente (12, 14) des Weiteren das Ausrichten der maschinenlesbaren Symbole (30) auf dem einen Chipelement (12, 14) in Bezug auf die maschinenlesbaren Symbole (30) auf einem anderen Chipelement (12, 14) umfasst.

35. Verfahren nach Anspruch 24, wobei das Anordnen der Chipelemente (12, 14) des Weiteren das Ausgleichen bzw. Absetzen (offset) der maschinenlesbaren Symbole (30) auf dem einen Chipelement (12, 14) in Bezug auf die maschinenlesbaren Symbole (30) auf einem anderen Chipelement (12, 14) umfasst.

36. Verfahren zur Herstellung eines eindeutig identifizierbaren Spielchips bzw. Spieljetons (10), wobei das Verfahren umfasst:
Empfangen von digitalen Daten, welche eine Chipanforderung von einem entfernen Ort definieren, wobei wenigstens ein Teil der digitalen Daten Spielchipdesigndaten umfassen;
digitales Codieren eines eindeutigen Identifikators in ein maschinenlesbares Symbol (30);
Drucken des maschinenlesbaren Symbols (30) auf wenigstens einen ersten Bereich (26, 28) des wenigstens eines Substrats (38);
Drucken eines Zeichens definiert durch die digitalen Daten auf wenigstens einen zweiten Bereich (26, 28) des wenigstens einen Substrats (38); und
Formen wenigstens eines ersten Spielchips (12, 14) aus dem wenigstens einen Substrat (38) mit dem maschinenlesbaren Symbol (30) und dem Zeichen, welches in einer Innenseite des Spielchips (10) angeordnet ist und welches optisch von außerhalb des Spielchips lesbar ist.

37. Verfahren nach Anspruch 36, des Weiteren umfassend:
Befördern des Spielchips (10) zu einem entfernten Ort.

38. Verfahren nach Anspruch 36, wobei das Empfangen der digitalen Daten, welche eine Chipanforderung von einem entfernten Ort definieren, das Empfangen der eindeutigen Zeichen als Teil der digitalen Daten umfasst.

39. Verfahren nach Anspruch 36, des Weiteren umfassend:
vor Ort Erzeugen des eindeutigen Identifikators.

40. Verfahren nach Anspruch 36, wobei das Empfangen der digitalen Daten, welche eine Chipanforderung von einem entfernten Ort umfassen, das getrennte Empfangen einer Angabe einer gewünschten Bezeichnung und einer gewünschten Menge an Spielchips als einen Teil der digitalen Daten umfasst.

41. Verfahren nach Anspruch 36, des Weiteren umfassend:
Verschlüsseln des einzigartigen Identifikators vor dem digitalen Codieren.

## Revendications

1. Procédé de fabrication de jetons de jeux (10), ledit procédé comprenant :
l'apprêtage d'un premier élément (12) de jeton, muni d'une face extérieure et d'une face intérieure (26) opposée à ladite face extérieure, ladite face intérieure (26) dudit premier élément (12) du jeton formant une cavité, et portant au moins un identifiant spécifique (30) ; et
l'injection d'un matériau de garnissage dans la cavité formée par la face intérieure (26) dudit premier élément (12) du jeton, de manière à sceller ledit identifiant spécifique prévu au minimum dans ladite cavité dudit premier élément (12) du jeton, ledit premier élément (12) du jeton étant suffisamment transparent pour que ledit identifiant spécifique, prévu au minimum, puisse être lu optiquement à travers la face extérieure dudit premier élément (12) du jeton.

2. Procédé selon la revendication 1, comprenant en outre :
l'apprêtage d'un second élément (14) de jeton, muni d'une face extérieure et d'une face intérieure (28) opposée à ladite face extérieure ; et
le positionnement ledit second élément (14) du jeton en travers d'au moins une région de la cavité formée par la face intérieure (26) du premier élément (12) dudit jeton, préalablement au comblement de ladite cavité.

3. Procédé selon la revendication 1, comprenant en outre :
l'apprêtage d'un second élément (14) de jeton, muni d'une face extérieure et d'une face intérieure (28) opposée à ladite face extérieure ; et
la liaison dudit second élément (14) du jeton en travers d'au moins une région de la cavité formée par la face intérieure (26) du premier élément (12) dudit jeton.

4. Procédé selon la revendication 1, comprenant en outre :
l'apprêtage d'un second élément (14) de jeton, muni d'une face extérieure et d'une face intérieure (28) opposée à ladite face extérieure ; et
la liaison dudit second élément (14) du jeton en travers d'au moins une région de la cavité formée par la face intérieure (26) du premier élément (12) dudit jeton, par le biais du comblement de ladite cavité.

5. Procédé selon la revendication 1, comprenant en outre :
l'apprêtage d'un second élément (14) de jeton, muni d'une face extérieure et d'une face intérieure (28) opposée à ladite face extérieure, ladite face intérieure (28) dudit second élément (14) du jeton formant une cavité, et portant au moins un repère ; et
le comblement de ladite cavité formée par ladite face intérieure (28) dudit second élément (14) du jeton, afin de relier ledit second élément (14) dudit jeton au premier élément (12) dudit jeton, les cavités respectives desdits premier et second éléments dudit jeton se faisant mutuellement face.

6. Procédé selon la revendication 1, dans lequel le comblement de la cavité, formée par la face intérieure (26) du premier élément (12) du jeton, comprend l'injection d'un matériau de garnissage (20) apte à la combinaison chimique.

7. Procédé selon la revendication 1, dans lequel le comblement de la cavité, formée par la face intérieure (26) du premier élément (12) du jeton, comprend :
l'injection d'un matériau de garnissage (20) apte à la liaison thermique, et
le chauffage dudit matériau de garnissage (20) apte à la liaison thermique.

8. Procédé selon la revendication 1, comprenant en outre :
l'impression d'au moins un premier symbole (30) lisible à la machine, codant l'identifiant spécifique (31), sur au moins une région d'une première face (26) d'un substrat (38) ;
le découpage d'un fragment dudit substrat (38), ledit fragment incluant ledit premier symbole (30) lisible à la machine et codant ledit identifiant spécifique ; et
la mise en forme dudit fragment afin de créer le premier élément (12) du jeton, ladite première face (26) dudit substrat (38) constituant la face intérieure (26) dudit premier élément (12) dudit jeton.

9. Procédé selon la revendication 1, comprenant en outre :
l'apprêtage, au moins partiel, d'un flan (416) dans la cavité formée par la face intérieure (26) du premier élément (12) du jeton, préalablement au comblement de ladite cavité.

10. Procédé selon la revendication 1, comprenant en outre :
l'apprêtage au moins partiel d'un flan (416), consistant au moins soit en du métal, soit en du verre, dans la cavité formée par la face intérieure (26) du premier élément (12) du jeton, préalablement au comblement de ladite cavité.

11. Procédé selon la revendication 1, dans lequel le premier élément (12) du jeton, formant une cavité, implique un profilage dudit premier élément (12) dudit jeton pour former un ruban continu (524).

12. Procédé de fabrication de jetons de jeux (10), ledit procédé comprenant :
l'apprêtage d'un premier élément (12) de jeton, muni d'une région (34) approximativement plane et d'un bord périphérique (32) s'étendant perpendiculairement à partir d'un pourtour de ladite région plane (34), ledit bord périphérique (32) portant au moins un symbole (30) lisible à la machine et codant un identifiant spécifique ;
l'apprêtage d'un second élément (14) de jeton, muni d'une région (34) approximativement plane ; et
le collage dudit second élément (14) du jeton sur ledit premier élément (12) dudit jeton, par injection d'un matériau de garnissage en vue de sceller, à l'intérieur dudit jeton de jeux (10), ledit symbole (30) lisible à la machine, prévu au minimum et codant ledit identifiant spécifique, ledit premier élément (12) dudit jeton étant suffisamment transparent pour que ledit symbole (30) lisible à la machine, prévu au minimum et codant ledit identifiant spécifique, puisse être lu optiquement depuis l'extérieur dudit jeton de jeux (10).

13. Procédé selon la revendication 12, dans lequel l'apprêtage d'un premier élément (12) du jeton, et l'apprêtage d'un second élément (14) dudit jeton, comprennent la mise en place de chacun desdits premier et second éléments (12, 14) dudit jeton dans un moule (140) ; et dans lequel le collage dudit second élément (14) dudit jeton sur ledit premier élément (12) dudit jeton comprend l'injection d'un matériau de collage (20) dans ledit moule (140).

14. Procédé selon la revendication 12, dans lequel l'apprêtage d'un premier élément (12) du jeton, et l'apprêtage d'un second élément (14) dudit jeton, comprennent la mise en place de chacun desdits premier et second éléments (12, 14) dudit jeton dans un moule (140) ; et dans lequel le collage dudit second élément (14) dudit jeton sur ledit premier élément (12) dudit jeton comprend l'injection d'un matériau de collage (20), dans ledit moule (140), entre lesdits premier et second éléments (12, 14) dudit jeton.

15. Procédé selon la revendication 12, comprenant en outre :
l'impression, sur un substrat (38), d'une pluralité de symboles (30) lisibles à la machine, un certain nombre desdits symboles (30) lisibles à la machine codant un identifiant spécifique respectif ;
le découpage d'un fragment dudit substrat (38), ledit fragment incluant au moins l'un desdits symboles (30) lisibles à la machine et codant ledit identifiant spécifique ;
la mise en forme du bord périphérique (32) sur ledit fragment, afin de produire le premier élément (12) du jeton ; et
le découpage dissociant le second élément (14) dudit jeton d'avec ledit substrat (38).

16. Procédé selon la revendication 12, comprenant en outre :
l'impression, sur un substrat (38), d'une pluralité de symboles (30) lisibles à la machine, un certain nombre desdits symboles (30) lisibles à la machine codant un identifiant spécifique respectif ;
le découpage d'un fragment dudit substrat (38), ledit fragment incluant au moins l'un desdits symboles (30) lisibles à la machine et codant ledit identifiant spécifique ;
la mise en forme du bord périphérique (32) sur ledit fragment, afin de produire le premier élément (12) du jeton ; et
le découpage dissociant le second élément (14) dudit jeton d'avec un second substrat (38).

17. Procédé selon la revendication 12, comprenant en outre :
l'apprêtage entre les premier et second éléments (12, 14) du jeton, préalablement au collage dudit second élément (14) dudit jeton sur ledit premier élément (12) dudit jeton, d'un élément central (416) de jeton constitué d'un matériau à poids spécifique élevé.

18. Procédé selon la revendication 12, comprenant en outre :
l'apprêtage d'un élément d'alignement (424) entre les premier et second éléments (12, 14) du jeton, préalablement au collage dudit second élément (14) dudit jeton sur ledit premier élément (12) dudit jeton.

19. Procédé de fabrication de jetons de jeux (10) sur au moins un premier substrat (38), ledit procédé comprenant :
l'impression d'au moins un symbole (30) lisible à la machine, sur une pluralité de régions d'une première face (26, 28) d'au moins ledit premier substrat (38), ledit symbole (30) lisible à la machine codant un identifiant dévolu à l'identification spécifique du jeton de jeux (10) ;
la création d'au moins l'un des éléments (12, 14) de jeton, à partir dudit premier substrat (38), ledit élément (12, 14) de jeton présentant des faces intérieure et extérieure, au moins l'élément précité (12, 14) dudit jeton portant, sur sa face intérieure (26, 28), ledit symbole (30) lisible à la machine ;
la création d'un autre élément (12, 14) dudit jeton ;
le positionnement d'au moins l'un desdits éléments (12, 14) dudit jeton, dos à dos vis-à-vis d'un autre élément (12, 14) dudit jeton, de telle sorte que la face intérieure respective (26, 28), portant ledit symbole (30) lisible à la machine, se trouve à l'intérieur dudit élément dudit jeton ; et
la solidarisation dudit élément précité (12, 14) dudit jeton avec un autre élément (12, 14) dudit jeton, par injection d'un matériau de garnissage, de façon telle que ledit symbole (30) lisible à la machine, sur au moins ledit élément précité (12, 14) dudit jeton, puisse être lu optiquement à partir d'un emplacement extérieur audit jeton de jeux (10).

20. Procédé selon la revendication 19, dans lequel l'impression comprend l'impression d'un certain nombre de symboles (30), lisibles à la machine, autour d'un pourtour (32) d'au moins l'une des régions du premier substrat (38).

21. Procédé selon la revendication 19, dans lequel l'impression d'au moins le symbole (30), lisible à la machine, comprend l'impression à l'aide d'une encre invisible.

22. Procédé selon la revendication 19, dans lequel l'impression d'au moins le symbole (30), lisible à la machine, comprend l'impression d'un symbole (31) lisible à la machine et présentant une distorsion mathématique préalable.

23. Procédé selon la revendication 19, dans lequel la création d'au moins l'un des éléments (12, 14) du jeton comprend la définition d'une forme géométrique, ladite forme géométrique offrant une délimitation autour d'au moins l'une des régions du premier substrat (38) portant le symbole (30) lisible à la machine ; et une dissociation de ladite forme géométrique d'avec ledit premier substrat (38).

24. Procédé selon la revendication 19, dans lequel la création d'un autre élément (12, 14) du jeton comprend la définition d'une forme géométrique, ladite forme géométrique offrant une délimitation autour d'au moins l'une des régions du premier substrat (38) portant le symbole (30) lisible à la machine ; et une dissociation de ladite forme géométrique d'avec ledit premier substrat (38).

25. Procédé selon la revendication 19, dans lequel la création d'un autre élément (12, 14) du jeton comprend la définition d'une forme géométrique, ladite forme géométrique offrant une délimitation autour d'au moins l'une des régions d'un second substrat (38) ; et une dissociation de ladite forme géométrique d'avec ledit second substrat (38).

26. Procédé selon la revendication 22, dans lequel la création d'au moins l'un précité des éléments (12, 14) du jeton comprend la définition de la forme géométrique, ladite forme géométrique comportant une région intérieure et une région extérieure, ladite région extérieure s'étendant en direction de ladite région intérieure à partir de la délimitation définie par ladite forme géométrique, ladite région extérieure portant le symbole (30) lisible à la machine.

27. Procédé selon la revendication 24, dans lequel la création de l'élément (12, 14) dujeton, prévu au minimum, comprend la mise en forme des régions extérieures dudit élément dudit jeton de façon telle qu'elles s'étendent, approximativement, à la perpendiculaire des régions intérieures dudit élément dudit jeton.

28. Procédé selon la revendication 19, comprenant en outre :
l'impression d'un repère sur au moins la région située sur la première face (26, 28) du premier substrat (38).

29. Procédé selon la revendication 28, dans lequel l'impression du repère comprend l'impression d'un symbole (36) à lisibilité humaine, comprenant au moins des lettres, des nombres, des images, des caractères spéciaux ou des hologrammes.

30. Procédé selon la revendication 28, dans lequel l'impression du repère comprend l'impression d'un symbole (36) à lisibilité humaine, comprenant un ensemble d'informations personnalisées.

31. Procédé selon la revendication 28, dans lequel la création des éléments (12, 14) du jeton comprend la définition d'une forme géométrique propre à englober les repères.

32. Procédé selon la revendication 28, dans lequel l'impression du repère comprend l'intégration numérique du symbole (36) à lisibilité humaine dans le symbole (30) lisible à la machine.

33. Procédé selon la revendication 19, dans lequel le positionnement des éléments (12, 14) du jeton comprend, en outre, l'interposition d'un élément central (416) de jeton entre lesdits éléments (12, 14) dudit jeton.

34. Procédé selon la revendication 24, dans lequel le positionnement des éléments (12, 14) du jeton comprend en outre un alignement des symboles (30) lisibles à la machine, sur l'un précité (12, 14) desdits éléments dudit jeton, vis-à-vis des symboles (30) lisibles à la machine sur un autre élément (12, 14) dudit jeton.

35. Procédé selon la revendication 24, dans lequel le positionnement des éléments (12, 14) du jeton comprend en outre un décalage des symboles (30) lisibles à la machine, sur l'un précité (12, 14) desdits éléments dudit jeton, vis-à-vis des symboles (30) lisibles à la machine sur un autre élément (12, 14) dudit jeton.

36. Procédé de fabrication d'un jeton de jeux (10) identifiable de manière bien spécifique, ledit procédé comprenant :
la réception de données numériques, définissant une sollicitation dudit jeton émanant d'un emplacement éloigné, au moins une partie desdites données numériques comprenant des données conceptuelles dudit jeton de jeux ;
le codage, en mode numérique, d'un identifiant spécifique dans un symbole (30) lisible à la machine ;
l'impression dudit symbole (30), lisible à la machine, sur au moins une première région (26, 28) d'au moins un substrat (38) ;
l'impression d'un repère, défini par lesdites données numériques, sur au moins une seconde région (26, 28) dudit substrat (38) prévu au minimum ; et
la formation d'au moins un premier jeton de jeux (12, 14) à partir dudit substrat (38) prévu au minimum, ledit symbole (30) lisible à la machine et ledit repère étant situés dans une région intérieure dudit jeton de jeux (10), et pouvant être lus optiquement depuis l'extérieur dudit jeton de jeux.

37. Procédé selon la revendication 36, comprenant en outre :
le transfert du jeton de jeux (10) à un emplacement éloigné.

38. Procédé selon la revendication 36, dans lequel la réception de données numériques, définissant une sollicitation du jeton émanant d'un emplacement éloigné, comprend une réception du repère spécifique représentant une partie desdites données numériques.

39. Procédé selon la revendication 36, comprenant en outre :
une génération localisée de l'identifiant spécifique.

40. Procédé selon la revendication 36, dans lequel la réception de données numériques, définissant une sollicitation du jeton émanant d'un emplacement éloigné, comprend la réception à distance d'une indication de dénomination souhaitée et de quantité souhaitée de jetons de jeux, représentant une partie desdites données numériques.

41. Procédé selon la revendication 36, comprenant en outre :
un cryptage de l'identifiant spécifique préalablement au codage numérique.
